# EUROPEAN PATENT APPLICATION

(11) **EP 2 317 174 A2**
(43) Date of publication of application: **04.05.2011**
(21) Application number: 10188055.7
(22) Date of filing: 19.10.2010
(51) Int. Cl.: F16F 15/133

(54) **Damper device**

(30) Priority: 28.10.2009 JP 2009247251
(71) Applicant: AISIN SEIKI KABUSHIKI KAISHA, Kariya-shi, Aichi 448-8650 (JP)
(72) Inventor: Nakagaito, Satoshi, Kariya-shi Aichi 448-8650 (JP); Yamazumi, Atsushi, Kariya-shi Aichi 448-8650 (JP); Inoshita, Yoshitaka, Kariya-shi Aichi 448-8650 (JP); Miyamachi, Yoshihiro, Kariya-shi Aichi 448-8650 (JP); Suezaki, Hiroaki, Kariya-shi Aichi 448-8650 (JP); Saeki, Tomohiro, Kariya-shi Aichi 448-8650 (JP)
(74) Representative: TBK-Patent

(57) **Abstract**

A damper device (3) includes a first side plate (14, 42) arranged at a position axially displaced from a flywheel (11), a second side plate (15, 43) connected to the first side plate, a center plate member (17, 24, 41) between the first and second side plates, and a spring member (18) absorbing a torque fluctuation generated between the first and second side plates on the one hand and the center plate member on the other, wherein one of the first side plate and the center plate member is connected to the flywheel at an outer circumferential portion thereof and, an outer diameter of one of the first side plate or the center plate member, which is not connected to the flywheel, and the second side plate is set to be greater than an outer diameter of the other one of the first side plate or the center plate member and the second side plate.

## Description

### TECHNICAL FIELD

This disclosure generally relates to a damper device that absorbs a torque fluctuation occurring between rotational shafts.

### BACKGROUND

Generally, a damper device is arranged on, for example, a power transmission path between an engine and a transmission apparatus, in order to absorb (restrict, reduce) a torque fluctuation, which is generated by the engine and the transmission apparatus. The damper device includes a damper portion for absorbing the torque fluctuation by using a spring force, a hysteresis portion for absorbing (restricting) the torque fluctuation by using a hysteresis torque, which is generated due to friction at the hysteresis portion, and a limiter portion for generating a slip when a torsion of a rotational shaft is not completely absorbed by the damper portion and the hysteresis portion. In a case where a power transmission device includes the above-described damper device, a collision noise of gears (a gear noise that is generated when gears collide each other) is likely to be generated at the transmission apparatus because of engine vibrations. Specifically, in a case where an input shaft of the transmission apparatus is connected to an electric motor (or a motor generator) via a planetary gear mechanism in the power transmission device, which is mounted on a hybrid vehicle having,an engine and the electric motor as power sources, the gear noise is more likely to be generated at the transmission apparatus because of the engine vibrations. Accordingly, there exists a power transmission device having an inertia member on a power transmission path between an engine and a transmission apparatus independently of and in addition to a damper device in order to reduce a gear noise.

For example, disclosed in JP2002-13547A is a damper for a hybrid driving device, which transmits force generated by a first power source and a second power source to a driving wheel, while restricting a torque fluctuation generated by the first and second power sources. The damper for the hybrid driving device includes a first rotation member, which is rotationally driven by the first power source, a second rotation member, which is connected to the second power source via a planetary gear mechanism, a torsion member for restricting the torque fluctuation generated between the first and second rotation members, a limiter mechanism for interrupting a transmission of the force from the first rotation member to the second rotation member when the torque fluctuation generated between the first and second rotation members reaches a predetermined value, and an inertia member formed at the first rotation member or the second rotation member.

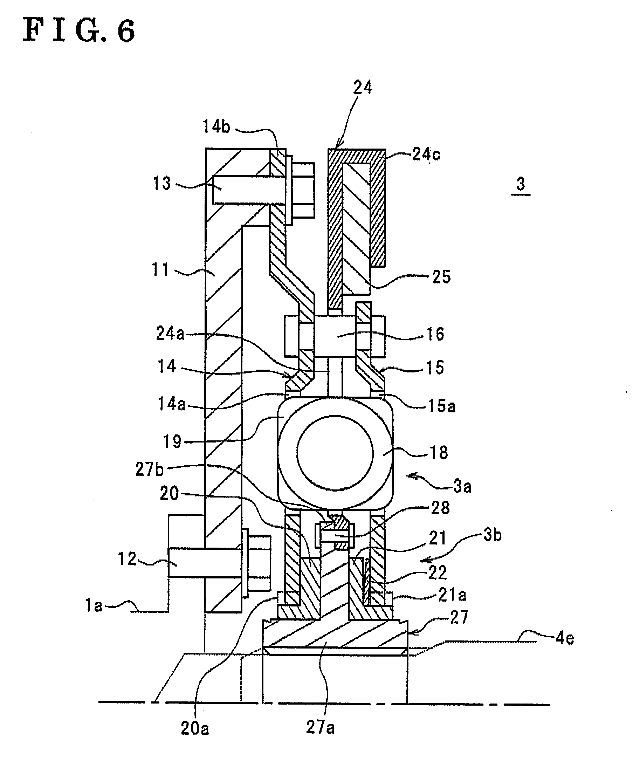

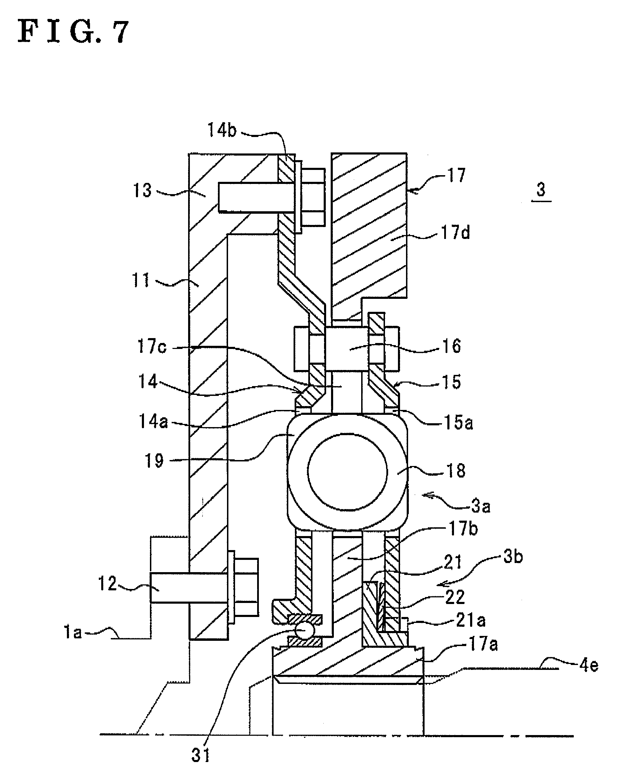

Generally, components, which generate most of inertia generated by the entire damper, are arranged on the power transmission path closer to the first power source (e.g. the engine) relative to a torsion member (e.g. a coil spring). Therefore, the inertia generated between the torsion member and the planetary gear mechanism is relatively small. As a result, the gear noise may not easily be reduced. On the other hand, the damper for the hybrid driving device disclosed in JP2002-13547A includes the inertia member on the power transmission path between the torsion member and the planetary gear mechanism (see Figs. 6 and 7 of the specification). However, in a case where the inertia member is fixed on the damper (see Fig. 6 of the specification), manufacturing costs of the damper may be increased because of fixation of the inertia member on the damper (i.e. because manufacturing processes are increased in order to fix the inertia member on the damper). Furthermore, in this case, because the inertia member is arranged closer to the planetary gear mechanism relative to the second rotation member of the damper, a size of the damper in an axial direction thereof may be increased. In a case where the inertia member is spline-engaged with a carrier shaft of the planetary gear mechanism (see Fig. 7 of the specification), a strength, reliability (in torsion) and the like of a connected portion between the inertia member and the carrier shaft may not be sufficient.

A need thus exists to provide a damper device, which reduces a gear noise while avoiding an increase of a size of the damper device in an axial direction.

### SUMMARY

According to an aspect of this disclosure, a damper device includes a first side plate arranged at a position displaced from a flywheel, to which a rotational force from a power source is transmitted, in an axial direction, a second side plate arranged at a position displaced towards the flywheel from the first side plate and connected to the first side plate, a center plate member provided between the first side plate and the second side plate, and a spring member absorbing a torque fluctuation generated between the first side plate and the second side plate on the one hand and the center plate member on the other hand, wherein one of the first side plate and the center plate member is connected to the flywheel at an outer circumferential portion thereof and, an outer diameter of one of the first side plate or the center plate member, which is not connected to the flywheel, and the second side plate is set to be greater than an outer diameter of the other one of the first side plate or the center plate member, which is not connected to the flywheel, and the second side plate.

Accordingly, because the outer diameter of the center plate member is set to be greater than the outer diameter of the second side plate, an inertia generated on a power transmission path between the spring member and the gear mechanism is increased. As a result, a gear noise may be avoided (reduced) from being generated at the gear mechanism while avoiding an increase of a size of the damper device in an axial direction.

Accordingly, because the outer diameter of the second side plate is set to be greater than the outer diameter of the first side plate so that the second side plate extends further in the radially outward direction than a portion at which the center plate and the flywheel are connected to each other, the inertia generated on the power transmission path between the spring member and the gear mechanism is increased, As a result, the gear noise may be avoided (reduced) from being generated at the gear mechanism while avoiding the increase of the size of the damper device in the axial direction.

According to another aspect of this disclosure, the first side plate is connected to the flywheel at the outer circumferential portion thereof, and the center plate member is formed so that the outer diameter thereof is set to be greater than the outer diameter of the first side plate or the second side plate.

According to a further aspect of this disclosure, the center plate member is formed so that a thickness at an outer circumferential portion thereof positioned radially outwardly of the second side plate is set to be thicker than a thickness at an inner circumferential portion of the center plate member.

According to a still further aspect of this disclosure, the center plate member includes a hub member, which outputs the rotational force towards the gear mechanism and a center plate which is connected to the hub member at an inner circumferential portion of the center plate, receives one end portion of the spring member at an intermediate portion of the center plate and is formed so that an outer diameter of the center plate becomes greater than an outer diameter of the first side plate or the second side plate.

According to a further aspect of this disclosure, wherein the center plate member includes an inertia member, which is connected to an outer circumferential portion of the center plate positioned radially outwardly of the second side plate.

According to a further aspect of this disclosure, the damper device further includes a bearing, which is provided between the center plate member and the first side plate or the second side plate in a radial direction of the damper device.

According to a further aspect of this disclosure, the damper device further includes a connecting pin, which connects the first side plate and the second side plate while keeping a predetermined distance therebetween and is inserted into an opening portion formed on the center plate so as to be movable in a circumferential direction.

According to a further aspect of this disclosure, the center plate member includes a cut-out portion or a hole portion so that a bolt passes therethrough in order to connect the first side plate to the flywheel at an outer circumferential portion thereof by means of the bolt.

According to a further aspect of this disclosure, wherein the first side plate is connected to the flywheel at an outer circumferential portion thereof by means of a bolt, which is attached to the flywheel and the first side plate from a surface of the flywheel facing opposite to the first side plate.

According to a further aspect of this disclosure, wherein at least one of the center plate member and the first side plate includes a gear portion at an outer circumferential surface.

According to a further aspect of this disclosure, the damper device further includes a dual hysteresis mechanism, wherein the dual hysteresis mechanism is arranged in parallel with a damper portion on a power transmission path of the damper device, generates a first hysteresis torque in a case where a torsion angle between the first side plate and the second side plate on the one hand and the center plate member on the other hand falls within a predetermined range and generates a second hysteresis torque, which is greater than the first hysteresis torque, in a case where the torsion angle exceeds the predetermined range.

According to a further aspect of this disclosure, the center plate is connected to the flywheel at the outer circumferential portion thereof and the second side plate is formed so that the outer diameter thereof is set to be greater than the outer diameter of the first side plate.

According to a further aspect of this disclosure, the second side plate includes a cut-out portion or a hole portion so that a bolt passes through the second side plate and the center plate is connected to the flywheel at an outer circumferential portion thereof by means of the bolt, which is attached to the center plate and the flywheel from a surface of the center plate facing the second side plate.

According to a further aspect of this disclosure, the damper device further includes a limiter portion, wherein the limiter portion is arranged on a power transmission path of the damper device so as to be arranged in parallel with the damper portion and generates a slip in a case where the torque fluctuation exceeds a predetermined value.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a diagram schematically illustrating a configuration of a hybrid drive device having a damper device according to a first embodiment;

Fig. 2 is a cross-sectional diagram partially and schematically illustrating the configuration of the damper device according to the first embodiment taken along a radial direction thereof;

Fig. 3 is a cross-sectional diagram partially and schematically illustrating a configuration of a damper device according to a second embodiment taken along a radial direction thereof;

Fig. 4A is a cross-sectional diagram partially and schematically illustrating a configurations of a damper device according to a third embodiment taken along a radial direction thereof;

Fig. 4B is a schematic diagram of an inertia member when being seen from a direction A;

Fig. 5 is a cross-sectional diagram partially and schematically illustrating a configuration of a damper device according to a fourth embodiment taken along a radial direction thereof;

Fig. 6 is a cross-sectional diagram partially and schematically illustrating a configuration of a damper device according to a fifth embodiment taken along a radial direction thereof.

Fig. 7 is a cross-sectional diagram partially and schematically illustrating a configuration of a damper device according to a sixth embodiment taken along a radial direction thereof;

Fig. 8 is a cross-sectional diagram partially and schematically illustrating a configuration of a damper device according to a seventh embodiment taken along a radial direction thereof;

Fig. 9 is a cross-sectional diagram partially and schematically illustrating a configuration of a damper device according to an eighth embodiment taken along a radial direction thereof;

Fig. 10 is a cross-sectional diagram partially and schematically illustrating a configuration of a damper device according to a ninth embodiment taken along a radial direction thereof;

Fig. 11 is a cross-sectional diagram partially and schematically illustrating a configuration of a damper device according to a tenth embodiment taken along a radial direction thereof;

Fig. 12 is a cross-sectional diagram partially and schematically illustrating a configuration of a damper device according to an eleventh embodiment taken along a radial direction thereof;

Fig. 13 is a cross-sectional diagram partially and schematically illustrating a configuration of a damper device according to a twelfth embodiment taken along a radial direction thereof;

Fig. 14 is a cross-sectional diagram partially and schematically illustrating a configuration of a damper device according to a thirteenth embodiment taken along a radial direction thereof;

Fig. 15 is a cross-sectional diagram partially and schematically illustrating a configuration of a damper device according to a fourteenth embodiment taken along a radial direction thereof;

Fig. 16 is a cross-sectional diagram partially and schematically illustrating a configuration of a damper device according to a fifteenth embodiment taken along a radial direction thereof;

Fig. 17 is a cross-sectional diagram partially and schematically illustrating a configuration of a damper device according to a sixteenth embodiment taken along a radial direction thereof;

Fig. 18 is a cross-sectional diagram partially and schematically illustrating a configuration of a damper device according to a seventeenth embodiment taken along a radial direction thereof; and

Fig. 19 is a cross-sectional diagram partially and schematically illustrating a configuration of a damper device according to an eighteenth embodiment taken along a radial direction thereof.

### DETAILED DESCRIPTION

[Brief overview]

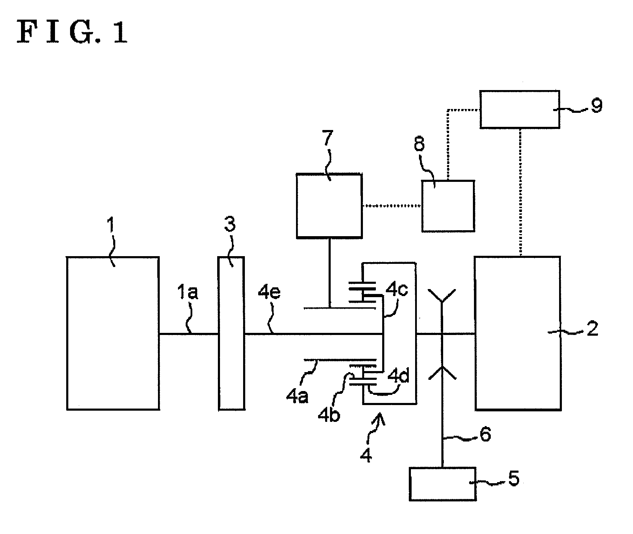

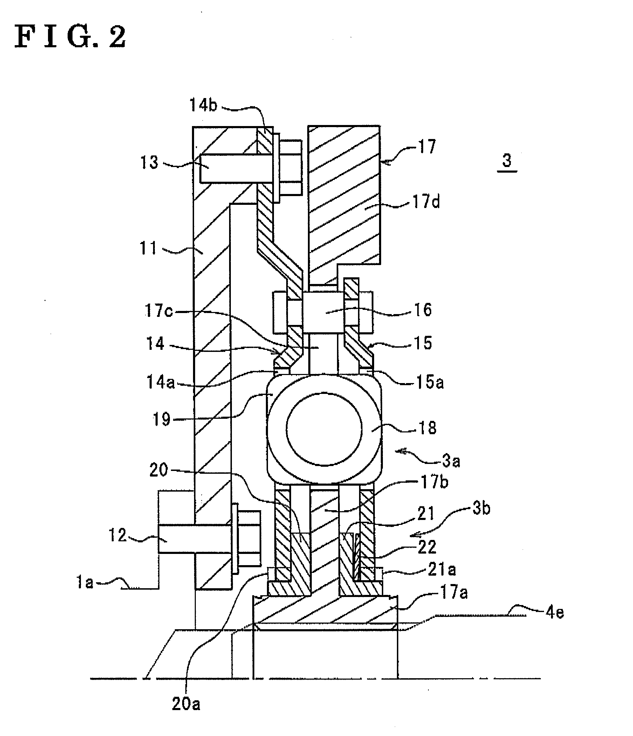

A damper device (3) according an aspect of this disclosure includes a first side plate (14, see Fig. 2), a second side plate (15, see Fig. 2), a center plate member (17, see Fig. 2) and a spring member (18, see Fig. 2). The first side plate (14) is connected to a flywheel (11, see Fig. 2), to which a rotational force of a power source (1, see Fig. 1) is transmitted, at an outer circumferential portion of the flywheel (11). The second side plate (15) is arranged at a position displaced from the first side plate (14) in an axial direction of the damper device (3). Furthermore, the second side plate (15) is connected to the first side plate (14). The center plate member (17) is provided between the first side plate (14) and the second side plate (15). Furthermore, the center plate member (17) is configured so as to output the rotational force to a gear mechanism (4, see Fig. 1). The spring member (18) is configured so as to absorb torque fluctuation generated between the first side plate (14) and the second side plate (15) on the one hand and the center plate member (17) on the other hand. The center plate member (17) is formed so that an outer diameter thereof is greater than an outer diameter of the second side plate (15).

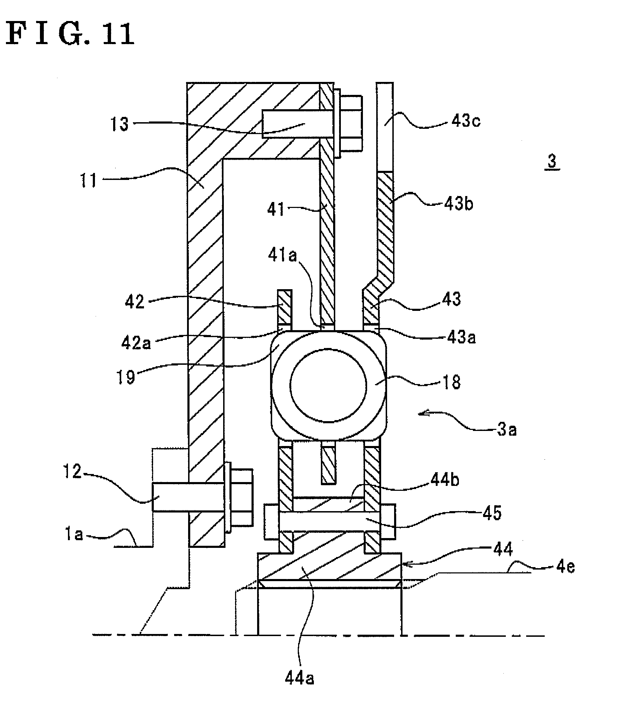

A damper device (3) according to another aspect of this disclosure includes a center plate (41, see Fig. 11), a hub member (44, see Fig. 11), a first side plate (42, see Fig. 11), a second side plate (43, see Fig. 11) and a spring member (18, see Fig. 11). The center plate (41) is connected a flywheel (11, see Fig. 11), to which a rotational force of a power source (1, see Fig. 1) is transmitted, at an outer circumferential portion of the flywheel (11). The hub member (44) is configured so as to output the rotational force to a gear mechanism (4, see Fig. 1). The first side plate (32) is arranged at a position displaced from the center plate (41) towards the flywheel (11). Furthermore, the first side plate (42) is connected to the hub member (44) at an inner circumferential portion of the first side plate (42). The second side plate (43) is arranged at a position displaced from the center plate (41) in a direction away from the flywheel (11). Furthermore, the second side plate (43) is connected to the first side plate (42), The spring member (18) is configured so as to absorb torque fluctuation generated between the center plate (41) on the one hand and the first side plate (42) and the second side plate (43) on the other hand. The second side plate (43) is formed so that an outer diameter thereof is greater than an outer diameter of the first side plate (42).

[First embodiment]

A first embodiment of a damper device 3 will be described below with reference to the attached drawings, Illustrated in Fig. 1 is a diagram schematically illustrating a configuration of a hybrid drive device having the damper device according to the first embodiment, Illustrated in Fig. 2 is a cross-sectional diagram partially and schematically illustrating the configuration of the damper device according to the first embodiment taken along a radial direction thereof;

As illustrated in Fig. 1, the hybrid drive device includes an engine 1 serving as a first power source, an electric motor 2 serving as a second power source, a damper device 3, which is provided between the engine 1 and the electric motor 2 and reduces a torque fluctuation generated therebetween, a planetary gear mechanism 4 provided between the electric motor 2 and the damper device 3, a speed reduction mechanism 5 for transmitting a force to a driving wheel, a belt 6 connecting a ring gear 4d of the planetary gear mechanism 4 and the speed reduction mechanism 5, a motor generator 7 connected to a sun gear 4a of the planetary gear mechanism 4, and a battery 9 electrically connected to the motor generator 7 and the electric motor 2 via an inverter 8.

An output shaft 1a of the engine 1 is connected to a carrier 4c of the planetary gear mechanism 4 via the damper device 3 and a shaft 4e. A pinion gear 4b is rotatably supported by the carrier 4c. Furthermore, the pinion gear 4b is provided at the planetary gear mechanism 4 so as to revolve around an outer circumference of the sun gear 4a. The pinion gear 4b is meshed with the sun gear 4a and the ring gear 4d. A rotation shaft of the motor generator 7 is connected to the sun gear 4a of the planetary gear mechanism 4, so that an electric energy generated in response to a drive of the engine 1 is charged in the battery 9, A rotation shaft of the electric motor 2 is connected to the ring gear 4d.

The hybrid drive device is configured so that a rotational force generated by the engine 1 is transmitted to the carrier 4c of the planetary gear mechanism 4 via the damper device 3 and the shaft 4e in a case where only the engine 1 is driven. Accordingly, the entire carrier 4c rotates about the output shaft 1a of the engine 1, so that the ring gear 4d rotates and the force is transmitted to the speed reduction mechanism 5 via the belt 6, thereby driving the driving wheel. Simultaneously, the sun gear 4a is also rotated, so that an electricity is generated by the motor generator 7. The generated electricity is charged in the battery 9.

On the other hand, in a case where the engine 1 is stopped and only the electric motor 2 is actuated, the ring gear 4d is rotated and the force is transmitted to the speed reduction mechanism 5 via the belt 6. In this case, because the carrier 4c only subjectively rotates without changing its position, the force generated by the electric motor 2 is not transmitted to the engine 1.

The hybrid drive device may be configured so that both of the engine 1 and the electric motor 2 are driven and the force generated by both of the engine 1 and the electric motor 2 is transmitted to the speed reduction mechanism 5. The above-mentioned switching of the power source (i.e. a switching between an actuation and non-actuation of the electric motor 2) may be achieved by a control device on the basis of various signals indicating, for example, a vehicle speed, an acceleration opening degree and the like.

As illustrated in Fig. 2, the damper device 3 of the hybrid drive device is configured so as to have a torsion absorbing function (a torsion reduction function). More specifically, the damper device 3 includes a damper portion 3a for absorbing the torque fluctuation by using a spring force (a resilience force), and a hysteresis portion 3b for absorbing (reducing, restricting) the torque fluctuation by using a hysteresis torque generated due to a friction and the like. According to the damper device 3 of the first embodiment, the damper portion 3a and the hysteresis portion 3b are combined together so as to be formed as a unit, in order to facilitate assembling of the damper device 3. The damper portion 3a is arranged in parallel with the hysteresis portion 3b on a power transmission path. A center plate member 17, which is one of components of the damper portion 3a and which is provided closer to an output side (i.e. the planetary gear mechanism 4) relative to a coil spring 18 serving as a torsion member on the power transmission path, functions as a spring member (a resilience member). Furthermore, the center plate member 17 is formed so as to extend more than the coil spring 18 in a radial direction of the damper device 3 (e.g. an outer circumferential portion of the center plate member 17 is positioned outwardly of the coil spring 18 in the radial direction) in order to ensure a gear noise reduction function. The damper device 3 includes a first side plate 14, a second side plate 15, a connecting pin 16 (in this embodiment, plural connecting pins 16 are provided), the center plate member 17, the coil spring 18 (in this embodiment plural coil springs 18 are provided), a seat member 19 (in this embodiment, plural seat members 19 are provided, more specifically, plural pairs of seat members 19 are provided), a first thrust member 20, a second thrust member 21, and a disc spring 22 as major components.

The first side plate 14, which is formed in an annular shape, is provided closer to the flywheel 11 relative to the center plate member 17. The first side plate 14 is a component of the damper portion 3a and the hysteresis portion 3b. Furthermore, the first side plate 14 includes an extended portion 14b, which is positioned outwardly of the connecting pins 16 in the radial direction (i.e. the first side plate 14 includes the extended portion 14b, so that the first side plate 14 extends radially outwardly of the connecting pins 16). The extended portion 14b of the first side plate 14 is connected to a cylindrical portion of the flywheel 11 by means of a bolt 13 (in this embodiment, plural bolts 13 are provided). The first side plate 14 is connected to the second side plate 15 at an outer circumferential portion relative to the damper portion 3a by means of the connecting pins 16. Furthermore, the first side plate 14 includes an opening portion 14a in order to accommodate the coil spring 18 and a pair of the seat members 19 at the damper portion 3a. In this embodiment, plural opening portions 14a are formed at the first side plate 14. On of the pair of the seat members 19 is attached at one end portion of the coil spring 18 and the other one of the pair of the seat members 19 is provided at the other end portion of the coil spring 18. Each of the opening portions 14a is formed at the first side plate 14 so that end surfaces of the opening portion 14a in the circumferential direction are allowed to contact and detach from the seat members 19, which are provided at the corresponding coil spring 18, respectively. The first side plate 14 press-contacts the first thrust member 20 in an axial direction of the damper device 3 at the hysteresis portion 3b, which is positioned inwardly of the damper portion 3a in the radial direction. More specifically, the first side plate 14 is engaged with the thrust member 20 by means of a detent portion 20a (i.e. a portion for prevent a rotation, a plural detent portions 20a may be provided), so that the first side plate 14 is not allowed to be rotatable relative to the first thrust member 20, in other words, the first side plate 14 is rotated together with the first thrust member 20 as a unit, while the first side plate 14 is allowed to be movable in the axial direction. Furthermore, the first side plate 14 is supported by an outer circumferential surface of a hub portion 17a of the center plate member 17 via the first thrust member 20 while allowing the first side plate 14 to rotate relative to the hub member 17a (the center plate member 17).

The flywheel 11, which is formed in an annular shape, is attached and fixed on the output shaft 1a of the engine 1 by means of a bolt 12 (in this embodiment, plural bolts 12 are provided). Additionally, the flywheel 11 is not included in the damper device 3. The extended portion 14b of the first side plate 14 is attached and connected to the cylindrical portion, which extends towards the center plate member 17 from a surface of an outer end portion of the flywheel 11 facing the damper portion 3a, by means of the bolts 13.

The second side plate 15, which is formed in an annular shape, is provided at a position further away from the flywheel 11 than the center plate member 17 in the axial direction. The second side plate 15 is a component of the damper portion 3a and the hysteresis portion 3b. Furthermore, the second side plate 15 is connected to the first side plate 14 by means of the connecting pins 16 at an outer circumferential portion of the second side plate 15 relative to the damper portion 3a in the radial direction. The second side plate 15 is formed so as not to extend in a radially outward direction from a portion thereof connected to the first side plate 14 by means of the connecting pins 16 in order to avoid a contact with an inertia member portion 17d of the center plate member 17. Furthermore, the second side plate 15 includes an opening portion 15a in order to accommodate the coil springs 18 and a pair of the seat members 19 at the damper portion 3a. In this embodiment, plural opening portions 15a are formed at the second side plate 15 so as to correspond to the opening portions 14a of the first side plate 14, Each of the opening portions 15a is formed at the second side plate 15 so that circumferential end surfaces of the opening portion 15 are allowed to contact and detach from the seat members 19, which are provided at the respective end portions of the corresponding spring coil 18, respectively. The second side plate 15 supports the disc spring 22 at the hysteresis portion 3b, which is positioned inwardly of the damper portion 3a in the radial direction. Still further, the second side plate 15 is engaged with the second thrust member 21 by means of a detent portion 21 a (or plural detent portions 21 a) so as to be movable in the axial direction and so as not to be rotatable relative to the second thrust member 21 (in other words, the second side plate 15 is rotated together with the second thrust member 21 as a unit). The second side plate 15 is supported by the outer circumferential surface of the hub portion 17a of the center plate member 17 via the second thrust member 21 so as to be rotatable relative to the hub portion 17a (the center plate member 17).

Each of the connecting pins 16 is formed in a pin-shape and integrally connects the first side plate 14 and the second side plate 15 as a unit while keeping a predetermined distance therebetween. More specifically, the first side plate 14 is caulked by one end portion of each of the connecting pins 16 and the second side plate 15 is caulked by the other end portion of each of the connecting pins 16. Accordingly, an intermediate portion of each of the connecting pins 16 serves as a spacer for maintaining the distance between the first side plate 14 and the second side plate 15. Furthermore, the intermediate portion of each of the connecting pins 16 is inserted into an opening portion 17c of the center plate member 17. In this embodiment, plural opening portions 17c are formed at the center plate member 17. Furthermore, each of the connecting pins 16 is allowed to move in a circumferential direction of the center plate member 17 within a range of the opening portion 17c (i.e. for a distance between end surfaces of the corresponding opening portion 17c in the circumferential direction). Alternatively, a protruding portion (plural protruding portions) may be formed at the second side plate 15 and the protruding portions may be connected to the first side plate 14 by means of rivets, or the protruding portions may be connected to the first side plate 14 by welding, caulking and the like, instead of using the connecting pins 16.

The center plate member 17, which is formed in an annular shape or a disc shape, is provided between the first and second side plates 14 and 15. The center plate member 17 is a component of the damper portion 3a and the hysteresis portion 3b. The center plate member 17 is formed so that a plate portion 17b thereof extends in the radially outward direction of the damper device 3 from the outer circumferential surface of the hub portion 17a, which is formed in a cylindrical shape. The opening portions 17c are formed at the plate portion 17b in order to accommodate the corresponding coil springs 18 and the corresponding seat members 19. Furthermore, each of the opening portions 17c is formed so that end surfaces thereof in the circumferential direction are allowed to contact and detached from the seat members 19, which are attached at the respective end portions of the coil spring 18, respectivaly. Each of the connecting pins 16 is inserted into the corresponding opening portion 17c at a position outwardly of the coil spring 18 in the radial direction, while allowing each of the connecting pins 16 to move in the circumferential direction within a predetermined range. The plate portion 17b is formed so as to extend further in the radially outward direction than the opening portions 17c, so that an outer diameter of the plate portion 17b is set to be greater than an outer diameter of the second side plate 15. More specifically, the center plate member 17 is formed so that a diameter thereof may preferably be 1.1 times equal to or greater than a diameter of the second side plate 15. An inertia member portion 17d is formed at an outer circumferential portion of the plate portion 17b, so that a thickness of the outer circumferential portion of the plate member 17b (i.e. a portion of the plate member 17b outwardly of the second side plate 15 in the radial direction) is formed to be thicker than a thickness of other portions of the plate member 17b. More specifically, the center plate member 17 is formed so that the thickness of the portion thereof outwardly of the second side plate 15 in the radial direction (e.g. the thickness of the inertia member portion 17d) may preferably be 1.1 times equal to or greater than the thickness of the portion of the center plate member 17 inwardly of the second side plate 15 in the radial direction. The inertia member portion 17d is formed at the center plate member 17 so as to protrude towards the second side plate 15 while avoiding a contact with the bolts 13 and the second side plate 15. The plate portion 17b press-contacts the first and second thrust members 20 and 21 at the hysteresis portion 3b radially inwardly of the damper portion 3a while being slidable relative to the first and second thrust members 20 and 21 in the axial direction. Inner splines are formed at an inner circumferential surface of the hub portion 17a in order to spline-engage with outer splines of the shaft 4e, so that the hub portion 17a is slidable relative to the shaft 4e in the axial direction. The hub portion 17a supports the first and second side plates 14 and 15 at the outer circumferential surface via the respective first and second thrust members 20 and 21 so as to be rotatable relative to the hub portion 17a. An inertia of the center plate member 17 accounts for equal to or more than 30 percent of an inertia of the entire damper device 3, more specifically, the inertia of the center plate member 17 preferably accounts for equal to or greater than 50 percent of the inertia of the entire damper device 3.

The coil springs 18 are components of the damper portion 3a. Each of the coil springs 18 is accommodated within the corresponding opening portions 14a, 15a and 17c, which are formed at the first side plate 14, the second side plate 15 and the center plate member 17, respectively, so that each of the coil springs 18 contacts the seat members 19, which are provided at the end portions of the corresponding coil spring 18 in the circumferential direction, respectively, Furthermore, the coil springs 18 are compressed when the first and second side plates 14 and 15 on the one hand and the center plate member 17 on the other hand rotate relative to each other in order to absorb a shock generated due to a rotational difference occurring between the first and second side plates 14 and 15 on the one hand and the center plate member 17 on the other hand. Either a straight-shaped coiled spring or a curved-shaped spring obtained by bending the straight-shaped coiled spring may be adapted as the coil spring 18. However, in order to obtain a greater torsion, an arc spring, which is formed so as to curve along the circumferential direction, may be adapted as the coil spring 18.

The seat members 19 are components of the damper portion 3a. Each pair of the seat members 19 is accommodated within the corresponding opening portions 14a, 15a and 17c, which are formed at the first side plate 14, the second side plate 15 and the center plate member 17, respectively. The seat member 19 is provided between one end surfaces of the corresponding opening portions 14a, 15a and 17c on the one hand and one end portion of the coil spring 18 in the circumferential direction. Furthermore, the seat member 19 is provided between the other end surfaces of the corresponding opening portions 14a, 15a and 17c on the one hand and the other end portion of the coil spring 18 on the other hand in the circumferential direction. In other words, a pair of the seat members 19 are provided for each coil spring 18. The seat members 19 may be made of a resin in order to reduce abrasion of the coil springs 18.

The first thrust member 20 is a component of the hysteresis portion 3b. The first thrust member 20, which is a friction material formed in an annular shape, is provided between the first side plate 14 and the center plate member 17. Furthermore, the first thrust member 20 press-contacts the center plate member 17 while allowed to be slidable in the axial direction. Still further, the first thrust member 20 includes the detent portion 20a in order to engage the first thrust member 20 with the first side plate 14 while allowing the first thrust member 20 to be movable in the axial direction and not allowing the first thrust member 20 to be rotated relative to the first side plate 14. The first thrust member 20 is provided on the outer circumferential surface of the hub portion 17a of the center plate member 17 so as to be rotatable relative to the hub portion 17a. Accordingly, the thrust member 20 serves as a bearing (a bush) of the first side plate 14.

The second thrust member 21 is a component of the hysteresis portion 3b. The second thrust member 21, which is a friction material formed in an annular shape, is provided between the second side plate 15 and the center plate member 17. The second thrust member 21 is biased by the disc spring 22 in the axial direction from a surface of the second thrust member 21 facing the second side plate 15, so that the second thrust member 21 slidably press-contacts the center plate member 17. Furthermore, the second thrust member 21 includes the detent portion 21 a in order to engage the second thrust member 21 on the one hand with the second side plate 15 and the disc spring 22 on the other hand while allowing the second thrust member 21 to be movable in the axial direction and not allowing the second thrust member 21 to be rotated relative to the second side plate 15 and the disc spring 22, The second thrust member 21 is provided on the outer circumferential surface of the hub portion 17a of the center plate member 17 so as to be rotatable relative to the hub portion 17a. Accordingly, the second thrust member 21 serves as a bearing (a bush) of the second side plate 15.

The disc spring 22 is a component of the hysteresis portion 3b. The disc spring 22, which is formed in a disc shape, is provided between the second side plate 15 and the second thrust member 21, so that the disc spring 22 biases the second thrust member 21 towards the center plate member 17.

According to the first embodiment, because the outer diameter of the plate portion 17b of the center plate member 17 is set to be greater than the outer diameter of the second side plate 15, the inertia generated on the power transmission path between the coil springs 18 and the planetary gear mechanism 4 is increased, thereby reducing a gear noise (i.e. a noise generated when gears collide with each other) generated at the planetary gear mechanism 4 while avoiding an increase of a size of the damper device 3 in the axial direction. Furthermore, because the thickness of the outer circumferential portion of the plate portion 17b of the center plate 17 is set to be thicker than the thickness of the inner circumferential portion of the plate portion 17b, the inertia generated on the power transmission path between the coil springs 18 and the planetary gear mechanism 4 is further increased, so that the gear noise may be further avoided from being generated at the planetary gear mechanism 4.

[Second embodiment]

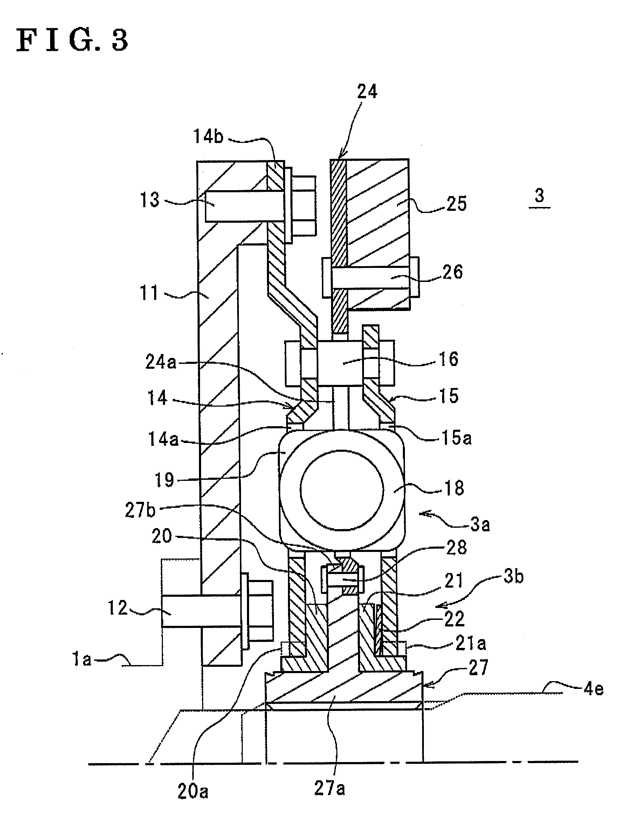

A second embodiment of the damper device 3 will be described below with reference to Fig. 3. Illustrated in Fig. 3 is a cross-sectional diagram partially and schematically illustrating a configuration of the damper device 3 according to the second embodiment taken along in a radial direction.

The damper device 3 of the second embodiment is a modified example of the damper device 3 of the first embodiment. In the second embodiment, the center plate member 17 of the first embodiment is modified so as to include a center plate 24. More specifically, the damper device 3 of the second embodiment includes an unit, which is composed of the center plate 24, an inertia member 25, a rivet 26 (in this embodiment, plural rivets 26 are provided), a hub member 27 and a rivet 28 (in this embodiment, plural rivets 28 are provided), instead of the center plate member 17 (see Fig. 2), in which the hub portion 17a, the plate portion 17b and the inertia member portion 17d are integrally formed. An inertia of the unit of the damper device 3 according to the second embodiment accounts for equal to or grater than 30 percent of the inertia of the entire damper device 3, preferably, the inertia of the unit accounts for equal to or greater than 50 percent of the inertia of the entire damper device 3, Other configurations of the damper device 3 according to the second embodiment are similar to the damper device 3 according to the first embodiment. Therefore, only configurations and components of the damper device 3 of the second embodiment differing from the first embodiment will be described below.

The center plate 24, which is formed in an annular shape or in a disc plate shape, is provided between the first and second side plates 14 and 15. The center plate 24 is a component of the damper portion 3a. Furthermore, the center plate 24 includes an opening portion 24a (in this embodiment, plural opening portions 24a are formed) for accommodating the corresponding coil spring 18 and a pair of the seat members 19 while allowing end surfaces of the opening portion 24a in the circumferential direction contact and are detached from the seat members 19, which are provided at the respective end portions of the coil spring 18, respectively. Each of the connecting pins 16 is inserted into the corresponding opening portion 24a at a position radially outwardly of the coil springs 18, while allowing each of the connecting pins 16 to be movable in the circumferential direction within a predetermined range. Moreover, the center plate 24 is formed so as to extend further in the radially outward direction than the opening portions 17c. Accordingly, an outer diameter of the center plate 24 is greater than the outer diameter of the second side plate 15. More specifically, a diameter of the center plate 24 is set to be 1.1 times equal to or greater than the diameter of the second side plate 15. The inertia member 25 is attached on the outer circumferential portion of the center plate 24 (i.e. a portion of the center plate 24 radially outwardly of the second side plate 15) by means of the rivets 26. On the other hand, an inner circumferential portion of the center plate 24 (i.e. a portion of the center plate 24 radially inwardly of the opening portions 24a) is attached to a flange portion 27b of the hub member 27 by means of the rivets 28.

The inertia member 25 is formed in an annular shape. The inertia member 25 is attached on a surface of the outer circumferential portion of the center plate 24 facing the second side plate 15 by means of the rivets 26. Furthermore, the inertia member 25 is formed so as not to contact the second side plate 15 and is arranged at a position radially outwardly of the second side plate 15.

The hub member 27 outputs a rotational force and is a component of the hysteresis portion 3b. The hub member 27 includes the flange portion 27b, which extends in the radially outward direction from a predetermined portion of an outer circumferential portion of a hub portion 27a. The center plate 24 is attached on a radially outer circumferential portion of the flange portion 27b by means of the rivets 28. The flange portion 27b press-contacts the first and second thrust members 20 and 21 at the hysteresis portion 3b, which is positioned radially inwardly of the rivets 28, while allowing the hub member 27 to be slidable in the axial direction. Inner splines are formed at an inner circumferential surface of the hub portion 27b in order to be engaged with the outer splines of the shaft 4e, so that the hub portion 27a is slidable relative to the shaft 4e in the axial direction. Furthermore, the hub portion 27a supports the first and second side plates 14 and 15 via the first and second thrust members 20 and 21, respectively, on the outer circumferential surface of the hub portion 27a, while allowing the first and second side plates 14 and 15 to be rotatable relative to the hub member 27.

According to the second embodiment, because the outer diameter of the center plate 24 is set to be greater than the outer diameter of the second side plate 15, the inertia generated on the power transmission path between the coil springs 18 and the planetary gear mechanism 4 (see Fig. 1) is increased, thereby reducing the gear noise to be generated at the planetary gear mechanism 4. Furthermore, because the inertia member 25 is attached at the outer circumferential portion of the center plate 24, the inertia generated on the power transmission path between the coil springs 18 and the planetary gear mechanism 4 is further increased, thereby further reducing the gear noise generated at the planetary gear mechanism 4. Still further, in the second embodiment, because the center plate member 17 of the damper device 3 according to the first embodiment is replaced by the unit, which is composed of the center plate 24, the inertia member 25, the rivets 26, the hub member 27 and the rivets 28, processing of the center plate 24, the inertia member 25 and the hub member 27 is facilitated, thereby reducing manufacturing costs of the damper device 3 according to the second embodiment.

[Third embodiment]

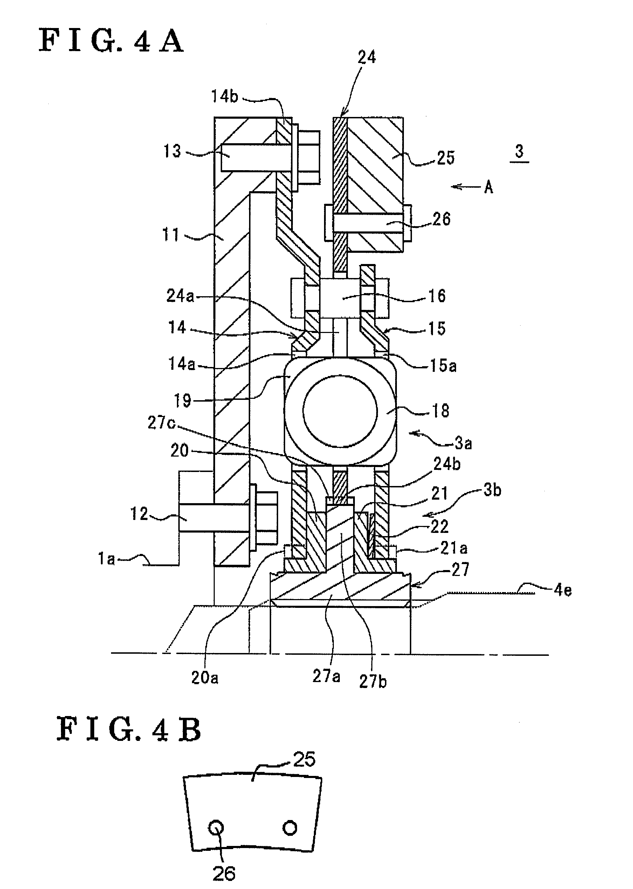

A third embodiment of the damper device will be described below with reference to Figs. 4A and 4B. Illustrated in Fig. 4A is a cross-sectional diagram partially and schematically illustrating a configuration of the damper device 3 according to the third embodiment taken long the radial direction, Furthermore, illustrated in Fig. 4B is a schematic diagram of the inertia member 25 of the damper device 3 according to the third embodiment when being viewed in a direction indicated by an arrow A in Fig. 4A.

The damper device 3 according to the third embodiment is a modified example of the damper device 3 of the second embodiment. More specifically, in the third embodiment, plural inertia members 25, each of which is formed as a piece, are provided at the damper device 3 instead of the annular shaped inertia member 25 (see Fig. 25) of the damper device 3 according to the second embodiment. Furthermore, in the third embodiment, the side plate 24 is spline-engaged with the flange portion 27b instead of attaching the side plate 24 to the flange portion 27b of the hub member 27 by means of the rivets 28 as in the second embodiment (see Fig. 3). Other configurations of the damper device 3 according to the third embodiment are similar to the damper device 3 of the second embodiment. Therefore, only configurations and components of the damper device 3 according to the third embodiment differing from the second embodiment will be described below.

Inner splines 24b are formed at an inner circumferential end surface of the center plate 24 in order to be spline-engaged with outer splines 27c of the hub member 27, Accordingly, the center plate 24 is attached on the hub member 27 so as not to be movable in the circumferential direction and in the axial direction. Other configurations of the center plate 24 of the damper device 3 according to the third embodiment are similar to the center plate 24 of the second embodiment (see Fig. 3).

Plural inertia members 25, each of which is formed as a piece, are arranged on the outer circumferential portion of the center plate 24 along the circumferential direction so as to form an annular shape with or without keeping a clearance between the neighboring inertia members 25. More specifically, the inertia members 25 are attached on a surface of the outer circumferential portion of the center plate 24 facing the second side plate 15 by means of the rivets 26. Furthermore, the inertia members 25 are arranged so as not to contact the second side plate 15 and so as to be positioned radially outwardly of the second side plate 15.

The hub member 27 includes the outer splines 27c at an outer circumferential surface of the flange portion 27b, so that the hub member 27 is spline-engaged with the center plate 24 via the outer splines 27c and the inner splines 24b. Accordingly, the center plate 24 is attached on the hub member 27 so as not to be movable in the circumferential direction and in the axial direction. Other configurations of the hub member 27 according to the third embodiment are similar to the hub member 27 of the second embodiment (see Fig. 3).

According to the third embodiment, in addition to advantages and merits similar to the second embodiment, because the damper device 3 is configured so that the center plate 24 and the hub member 27 are spline-engaged, assembly of the center plate 24 and the hub member 27 may be facilitated. Furthermore, because plural inertia member 25, each of which is formed as a piece, are provided at the damper device 3, a yield of the inertia members 25 may be increased.

[Fourth embodiment]

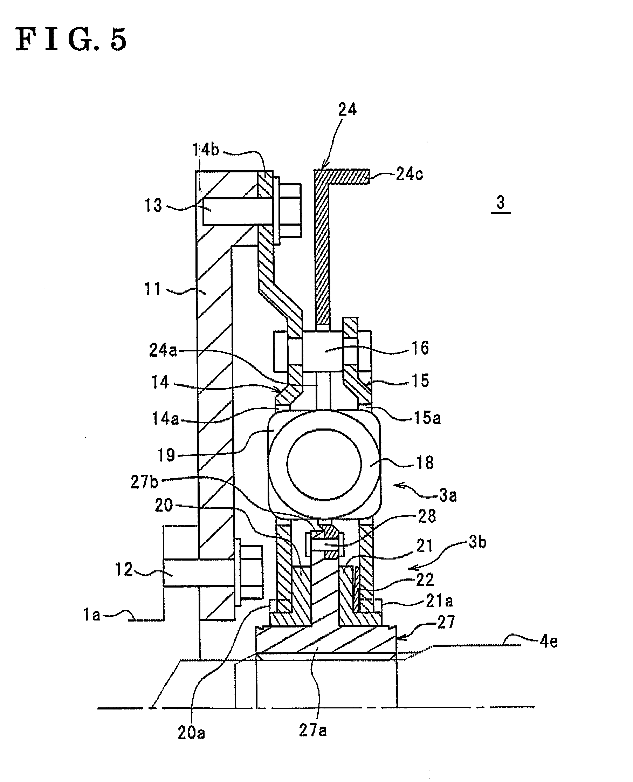

A fourth embodiment of the damped device will be described below with reference to Fig. 5. Illustrated in Fig. 5 is a cross-sectional diagram partially and schematically illustrating a configuration of the damper device 3 according to the fourth embodiment taken along the radial direction.

The damper device 3 according to the fourth embodiment is another modified example of the damper device 3 of the second embodiment. More specifically, according to the fourth embodiment, a bend portion 24c, which is obtained by bending the outer circumferential portion of the center plate 24 towards the second side plate 15, is formed at the center plate 24, instead of providing the inertia member 24 and the rivets 26 of the second embodiment (see Fig. 3). The bent portion 24c may be formed so that an end portion of thereof positioned closer to the second side plate 15 is further bent in a radially inward direction (in other words, the bent portion 24c may be formed so as to extend in the axial direction and in the radially inward direction). Other configurations of the damper device 3 according to the fourth embodiment are similar to the damper device 3 of the second embodiment. Additionally, the center plate 24 having the bent portion 24c may be adapted to the damper device 3 of the third embodiment (see Fig. 4).

According to the fourth embodiment, in addition to advantages and merits similar to the second embodiment, because the bend portion 24c is formed at the outer circumferential portion of the center plate 24, the inertia generated on the power transmission path between the coil springs 18 and the planetary gear mechanism 4 (see Fig. 1) is increased, thereby avoiding the gear noise from being generated at the planetary gear mechanism 4.

[Fifth embodiment]

A fifth embodiment of the damper device 3 will be described below with reference to Fig. 6. Illustrated in Fig. 6 is a cross-sectional diagram partially and schematically illustrating a configuration of the damper device 3 according to the fifth embodiment taken along the radial direction.

The damper device 3 according to the fifth embodiment is a modified example of the damper device 3 of the fourth embodiment. More specifically, in the fifth embodiment, the inertia member 25 is arranged at a position radially inwardly of the bent portion 24c of the center plate 24, so that the inertia member 25 is retained by the center plate 24 at the bent portion 24c. The inertia member is formed in an annular shape. The bent portion 24c of the center plate 24 is formed so as to extend in the axial direction and then in the radially inward direction, so that the bent portion 24c surrounds an outer circumferential surface of the inertia member 25. Other configurations of the damper device 3 according to the fifth embodiment are similar to the damper device 3 of the fourth embodiment.

According to the fifth embodiment, in addition to advantages and merits similar to the fourth embodiment, because the inertia member 25 is retained by the center plate 24 at the bent portion 24c, the inertia generated on the power transmission path between the coil springs 18 and the planetary gear mechanism 4 is further increased, thereby further reducing the gear noise generated at the planetary gear mechanism 4.

[Sixth embodiment]

A sixth embodiment of the damper device 3 will be described below with reference to Fig. 7. Illustrated in Fig. 7 is a cross-sectional diagram partially and schematically illustrating a configuration of the damper device 3 according to the sixth embodiment taken along the radial direction.

The damper device 3 according to the sixth embodiment is a further modified example of the damper device 3 of the first embodiment. More specifically, the damper device 3 of the sixth embodiment includes a bearing 31 instead of the thrust member 20 (see Fig. 2), so that the first side plate 14 is bore by the hub portion 17a of the center plate member 17 via the bearing 31. A ball bearing, which includes an outer race, an inner race and plural balls disposed between the outer race and the inner race, is adapted as the bearing 31. The outer race of the bearing 31 is fixed on (engaged with) the inner circumferential end portion of the first side plate 14. On the other hand, the inner race of the bearing 31 is fixed on (engaged with) the hub portion 17a of the center plate member 17. The bearing 31 is configured so that the outer race thereof does not contact the plate portion 17b of the center plate member 17. Other configurations of the damper device 3 according to the sixth embodiment are similar to the damped device 3 of the first embodiment. Additionally, the bearing 31 may be adapted to the damped device 3 of second, third, fourth and fifth embodiments.

According to the sixth embodiment, in addition to advantages and merits similar to the first embodiment, because the bearing 31 is provided between the first side plate 14 and the hub portion 17a of the center plate member 17, a torsion (specifically, a torsion in the axial direction) of the center plate member 17, which generates a relatively great torsion, may be effectively restricted.

[Seventh embodiment]

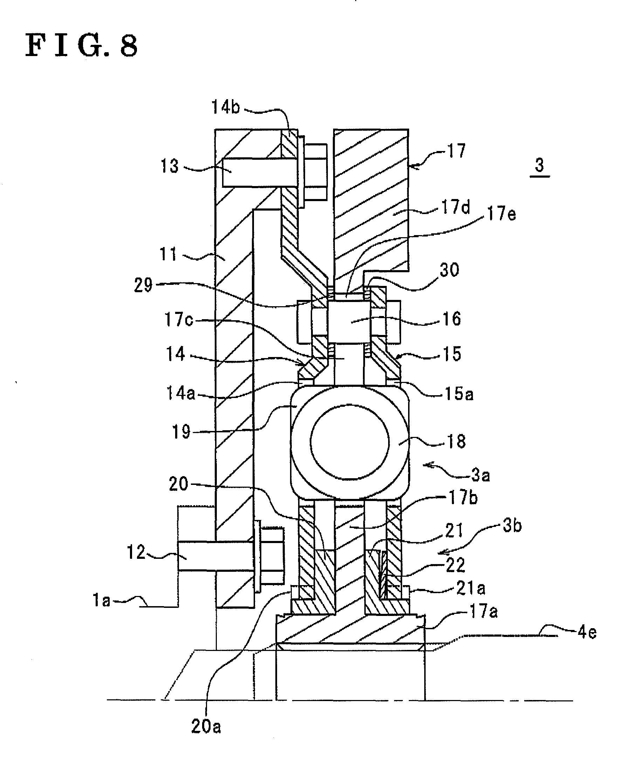

A seventh embodiment of the damper device 3 will be described below with reference to Fig. 8. Illustrated in Fig. 8 is cross-sectional diagram partially and schematically illustrating a configuration of the damper device 3 according to the seventh embodiment taken along the radial direction.

The damper device 3 according to the seventh embodiment is another modified example of the damper device 3 of the first embodiment. More specifically, in the seventh embodiment, a first washer 29 is provided on an outer circumferential surface of each of the connecting pins 16 so as to be positioned between the first side plate 14 and the plate portion 17b of the center plate member 17. Furthermore, a second washer 30 is provided on the outer circumferential surface of each of the connecting pins 16 so as to be positioned between the second side plate 15 and the plate portion 17b of the center plate member 17. Each of the first and second washers 29 and 30 is formed in an annular shape. Each of the connecting pins 16 is inserted into holes, which are formed on centers of the respective washers 29 and 30. The first and second washers 29 and 30 are provided at the damper device 3 in order to restrict the torsion of the plate portion 17b of the center plate member 17 in the axial direction. Each of the first washers 29 and each of the second washers 30 are provided between the plate portion 17b of the center plate member 17 on the one hand and the first and second side plates 14 and 15 on the other hand, respectively, so as to keep a slight clearance relative to the plate portion 17b, Each of the first and second washers 29 and 30 is made of a material having a great slidability, such as a resin and the like. The plate portion 17b of the center plate member 17 includes an opening portions 17e (in this embodiment, plural opening portions 17e are formed on the plate portion 17b) at a position radially outwardly of the opening portions 17c of the damper portion 3a. Each of the connecting pins 16 is inserted into the corresponding opening portion 17e of the center plate member 17, while allowing the connecting pin 16 to be movable in the circumferential direction within a predetermined range. Other configurations of the damper device 3 according to the seventh embodiment are similar to the damper device 3 of the first embodiment, Additionally, the first and second washers 29 and 30 may be provided to the damper device 3 of the second, third, fourth, fifth and sixth embodiments.

According to the seventh embodiment, in addition to advantages and merits similar to the first embodiment, the torsion of the center plate member 17, which generates relatively great inertia, in the axial direction may be effectively restricted (reduced) by means of the first and second washers 29 and 30.

[Eighth embodiment]

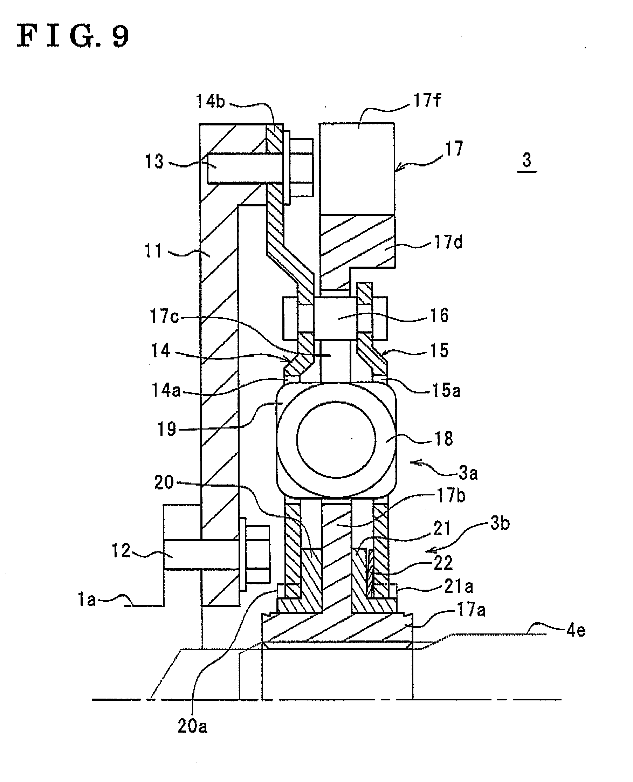

An eighth embodiment of the damper device 3 will be described below with reference to Fig. 9. Illustrated in Fig. 9 is cross-sectional diagram partially and schematically illustrating a configuration of the damper device 3 according to the eighth embodiment taken along the radial direction.

The damper device 3 of the eighth embodiment is another modified example of the damper device 3 of the first embodiment. More specifically, cut-out portions 17f (or holes) for allowing the respective bolts 13 to pass through the center plate member 17 are formed at the center plate portion 17b and the inertia member portion 17d of the center plate member 17, in a case where head portions of the respective bolts 13 (i.e. portions of the respective bolts 13 rotated by means of a tool) face the center plate member 17. Other configurations of the damper device 3 according to the eighth embodiment are similar to the damper device 3 of the first embodiment. Additionally, the out-out portion 17f may be formed at the damper device 3 of the second, third, fourth, fifth, sixth and seventh embodiments.

According to the eighth embodiment, because the cut-out portions 17f are provided at the plate portion 17b and the inertia member portion 17d of the center plate member 17, the bolts 13 are more easily provided to the damper device 3, thereby facilitating the assembly of the damper device 3.

[Ninth embodiment]

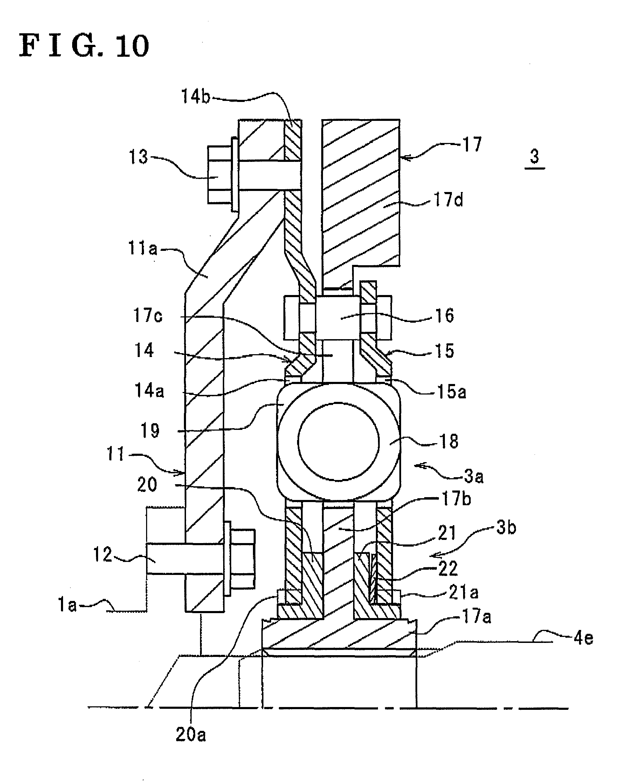

A ninth embodiment of the damper device 3 will be described below with reference to Fig. 10. Illustrated in Fig, 10 is cross-sectional diagram partially and schematically illustrating a configuration of the damper device 3 according to the ninth embodiment taken along the radial direction.

The damper device 3 according to the ninth embodiment is another modified example of the damper device 3 of the first embodiment. More specifically, according to the ninth embodiment where the head portions of the respective bolts 13 (i.e. the portions of the respective bolts 13 rotated by means of a tool) face the engine 1 (i.e, to the left in Fig. 10), a bent portion 11a is formed on the flywheel 11, so that the outer circumferential portion of the flywheel 11 protrudes towards the first side plate 14 relative to the inner circumferential portion of the flywheel 11, in order to facilitate the assembly of the damper device 3 from the engine side. Accordingly, a working space for the bolts 13 may be formed between the outer circumferential portion of the flywheel 11 and the engine 1 (see Fig. 1) because of the bent portion 11 a. The bolts 13 are used to attach the flywheel 11 to the extended portion 14b of the first side plate 14. Other configurations of the damper device 3 according to the ninth embodiment are similar to the damper device 3 of the first embodiment. Additionally, the configuration of the flywheel 11 having the bent portion 11a may be adapted to the damper device 3 of the second, third, fourth, fifth, sixth, seventh and eighth embodiments.

According to the ninth embodiment, in addition to advantages and merits similar to the first embodiment, in the case where the bolts 13 are provided at the damper device 3 so that the head portions of the respective bolts 13 face the engine 1, the assembly of the flywheel 11 from the engine side may be facilitated by forming the bent portion 11 a at the flywheel 11, thereby facilitating the assembly of the damper device 3.

[Tenth embodiment]

A tenth embodiment of the damper device 3 will be described below with reference to Fig. 11. Illustrated in Fig. 11 is cross-sectional diagram partially and schematically illustrating a configuration of the damper device 3 according to the tenth embodiment taken along the radial direction.

The damper device 3 according to the tenth embodiment is a modified example of the damper device 3 of the first embodiment. More specifically, in the tenth embodiment, a center plate 41, which is a modified example of the center plate member 17, is connected to the flywheel 11 by means of the bolts 13, instead of connecting the flywheel 11 and the first side plate 14 by means of the bolts 13. Furthermore, a unit composed of a first side plate 42, a second side plate 43, a rivet 45 (in this embodiment, plural rivets 45 are provided) and a hub member 44 serves as an output member of the damper portion 3a on the power transmission path at the output side (i.e. closer to the planetary gear mechanism 4, see Fig. 1) relative to the coil springs 18. The second side plate 43 is formed as to include an extended portion 43b, which is obtained by extending an outer circumferential portion of the second side plate 43 in the radially outward direction, in order to increase the inertia of the output member of the damper portion 3a. An inertia of the unit accounts for equal to or more than 30 percent of the inertia of the entire damper device 3, more specifically, the inertia of the unit preferably account for equal to or more than 50 percent of the inertia of the entire damper device 3. Other configurations of the damper device 3 according to the tenth embodiment are similar to the damper device 3 of the first embodiment. Therefore, only configurations and components of the damper device 3 according to the tenth embodiment differing from the first embodiment will be described below.

The center plate 41, which is formed in an annular shape or in a disc plate shape, is provided between the first and second side plates 42 and 43 and is a component of the damper portion 3a. The center plate 41 is connected to the cylindrical portion of the flywheel 11 by means of the bolts 13. Furthermore, the center plate 41 includes an opening portion 41a (in this embodiment, plural opening portions 41a are formed) at an intermediate portion of the center plate 41 serving the damper portion 3a in order to accommodate the corresponding coil spring 1$ and the corresponding pair of the seat members 19. Each of the opening portions 41 a is formed on the center plate 41 so that end surfaces of the opening portion 41a in the circumferential surface are allowed to contact and detach from the seat members 19, which are provided at the respective end portions of the corresponding coil spring 18, respectively. Furthermore, the center plate 41 is formed so that an inner circumferential end portion thereof is spaced away from (does not contact) a flange portion 44b of the hub member 44.

The first side plate 42, which is formed in an annular shape, is arranged so as to face a surface of the center plate 41 facing the flywheel 11. The first side plate 42 is a component of the damper portion 3a. Furthermore, the first side plate 42 includes an opening portion 42a (in this embodiment, plural opening portions 42a are formed) in order to accommodate therein the corresponding coil spring 18 and a pair of the seat members 19 at the damper portion 3a. Each of the opening portions 42a is formed so that end surfaces thereof is allowed to contact and are detached from the seat members 19, which are provided at the respective end portions of the corresponding coil spring 18, respectively, in the circumferential direction. The first side plate 42 is connected to the flange portion 44b of the hub member 44 by means of the rivets 45 at the inner circumferential portion together with the second side plate 43.

The second side plate 43, which is formed in an annular shape, is arranged so as to face a surface of the center plate 41 facing opposite to the flywheel 11. The second side plate 43 is a component of the damper portion 3a. Furthermore, the second side plate 43 includes an opening portion 43a (in this embodiment, plural opening portions 43a are formed) in order to accommodate therein the corresponding coil spring 18 and the corresponding pair of the seat members 19 at the damper portion 3a. Each of the opening portions 43a is formed on the second side plate 43 so that the seat members 19, which are provided at the respective end portions of the spring coil 18, contact and are detached from end surface of each of the opening portions 43a, respectively, in the circumferential direction. The second side plate 43 is connected to the flange portion 44b of the hub member 44 at the inner circumferential portion by means of the rivets 45 together with the first side plate 42. Furthermore, the second side plate 43 includes the extended portion 43b, which is obtained by extending the outer circumferential portion of the second side plate 43 in the radially outward direction relative to the damper portion 3a. Accordingly, an outer diameter of the second side plate 43 is set to be greater than an outer diameter of the first side plate 42 because of the extended portion 43b. More specifically a diameter of the second side plate 43 may preferably be set to be 1,1 times equal to or greater than a diameter of the first side plate 42. The extended portion 43b is formed so as to extend radially outwardly of the bolts 13. Furthermore, the extended portion 43b is formed on the second side plate 43 so as not to contact the bolts 13. In the case where the head portions of the respective bolts 13 (i.e. the portions of the respective bolts 13 rotated by a tool and the like) face the second side plate 43, cut-out portions 43c (or holes) are formed on the second side plate 43 in order to allow the bolts 13 to pass through the second side plate 43 via the respective cut-out portions 43c.

The hub member 44 outputs a rotational force. The hub member 44 includes the flange portion 44b, which is formed so as to extend in the radially outward direction from a predetermined portion of the outer circumferential surface of the hub portion 44a. The first and second side plates 42 and 43 are attached on side surfaces of the flange portion 44b in the axial direction, respectively, by means of the rivets 45. Inner splines are formed at an inner circumferential surface of the hub portion 44a in order to spline-engage with the outer splines of the shaft 4e. Accordingly, the hub member 44 is allowed be slide relative to the shaft 4e in the axial direction.

According to the tenth embodiment, because the outer diameter of the second side plate 43 is set to be greater than the outer diameter of the first side plate 42, and because the second side plate 43 is formed so as to extend radially outwardly of the bolts 13, the inertia generated on the power transmission path between the coil springs 18 and the planetary gear mechanism 4 (see Fig. 1) is increased, thereby reducing the gear noise at the planetary gear mechanism 4 while avoiding an increase of the size of the damper device 3 in the axial direction. Furthermore, because the cut-out portions 43c are formed at the second side plate 43, the bolts 13 are easily provided at the damper device 3, therefore, the assembly of the damper device 3 may be facilitated.

[Eleventh embodiment]

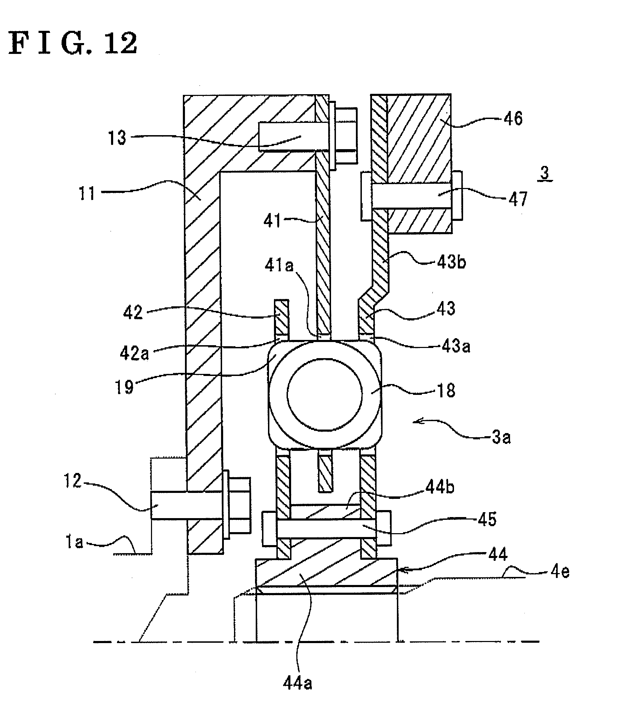

An eleventh embodiment of the damper device 3 will be described below with reference to Fig. 12. Illustrated in Fig. 12 is cross-sectional diagram partially and schematically illustrating a configuration of the damper device 3 according to the eleventh embodiment taken along the radial direction.

The damper device 3 according to the eleventh embodiment is a modified example of the damper device 3 of the tenth embodiment. More specifically, in the eleventh embodiment, an inertia member 46, which is formed in an annular shape (alternatively plural pieces of the inertia members 46 arranged along the circumferential direction), is attached on a surface of the extended portion 43b of the second side plate 43 facing opposite to the bolts 13 by means of a rivet 47 (in this embodiment, plural rivets 47 are provided). Other configurations of the damper device 3 according to the eleventh embodiment are similar to the damper device 3 of the tenth embodiment.

According to the eleventh embodiment, in addition to advantages and merits similar to the tenth embodiment, because the inertia member 46 is attached on the outer circumferential portion of the extended portion 43b of the second side plate 43, the inertia generated on the power transmission path between the coil springs 18 and the planetary gear mechanism 4 (see Fig. 1) may be further increased, so that the gear noise at the planetary gear mechanism 4 may be further avoided from being generated.

[Twelfth embodiment]

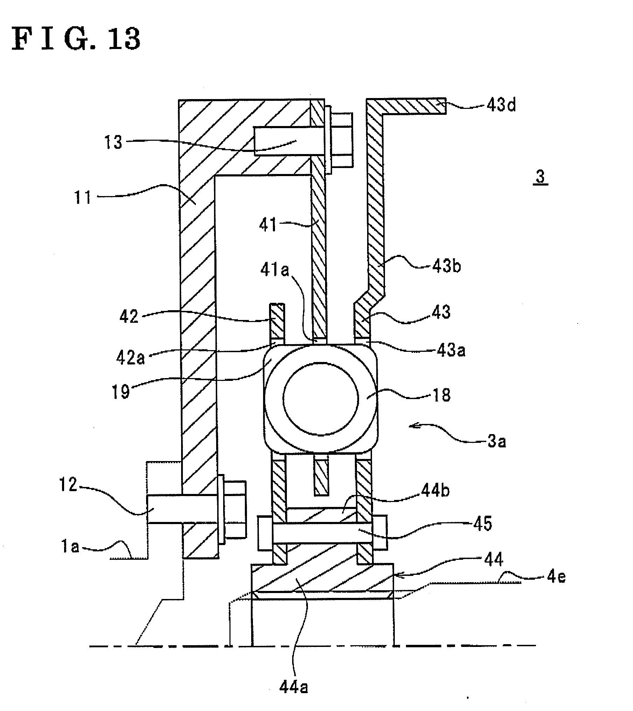

A twelfth embodiment of the damper device 3 will be described below with reference to Fig. '13. Illustrated in Fig. 13 is cross-sectional diagram partially and schematically illustrating a configuration of the damper device 3 according to the twelfth embodiment taken along the radial direction.

The damper device 3 according to the twelfth embodiment is a modified example of the damper device 3 of the eleventh embodiment. More specifically, in the twelfth embodiment, the second side plate 43 is configured so as to include a bent portion 43d, which is obtained by bending the outer circumferential portion of the second side plate 43 in a direction opposite to the bolts 13, instead of the inertia member 36 and the rivets 47 of the eleventh embodiment (see Fig. 12). The bent portion 43d may be further bent so that the bent portion 43d extends in the radially inward direction, in addition to the axial direction. Other configurations of the damper device 3 according to the twelfth embodiment are similar to the damper device 3 of the eleventh embodiment.

According to the twelfth embodiment, in addition to advantages and merits similar to the eleventh embodiment, because the bent portion 43d is formed at the outer circumferential portion of the extended portion 43b of the second side plate 43, the inertia generated on the power transmission path between the coil springs 18 and the planetary gear mechanism 4 (see Fig. 1) may be increased, so that the gear noise at the planetary gear mechanism 4 may be avoided from being generated.

[Thirteenth embodiment]

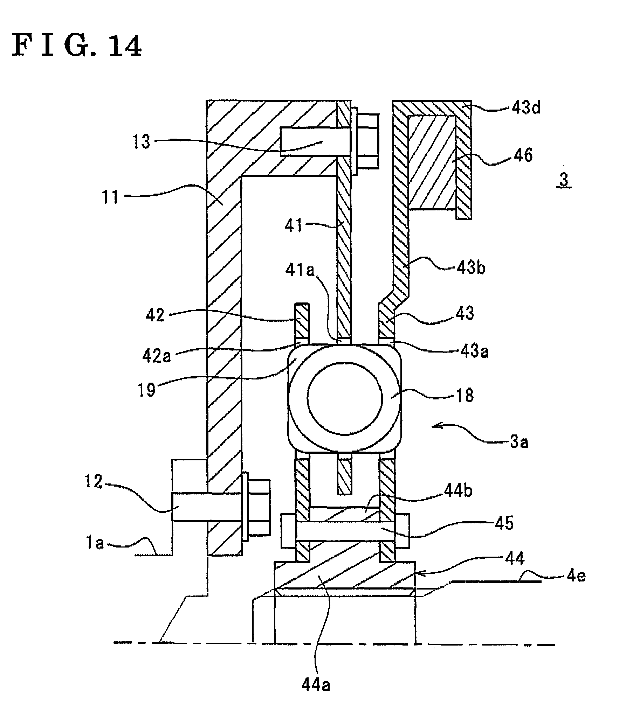

A thirteenth embodiment of the damper device 3 will be described below with reference to Fig. 14. Illustrated in Fig. 14 is cross-sectional diagram partially and schematically illustrating a configuration of the damper device 3 according to the thirteenth embodiment taken along the radial direction.

The damper device 3 according to the thirteenth embodiment is a modified example of the damper device 3 of the twelfth embodiment. More specifically, in the thirteenth embodiment, the inertia member 46 is provided within a space formed by the bend portion 43d of the second side plate 43 relative to the extended portion 43b, so that the inertia member 46 is retained by the second side plate 43 at the bent portion 43d. The inertia member 46 is formed in an annular shape, The bent portion 43d is formed so as to extend in the radially inward direction so as to cover an outer circumferential surface of the inertia member 46. Other configurations of the damper device 3 according to the thirteenth embodiment are similar to the damper device 3 of the twelfth embodiment.

According to the thirteenth embodiment, in addition to advantages and merits similar to the twelfth embodiment, because the damper device 3 is configured so that the inertia member 46 is retained at the side plate 43 at the bent portion 43d, the inertia generated on the power transmission path between the coil springs 18 and the planetary gear mechanism 4 (see Fig.1) may be further increased, so that the gear noise at the planetary gear mechanism 4 may be further avoided from being generated.

[Fourteenth embodiment]

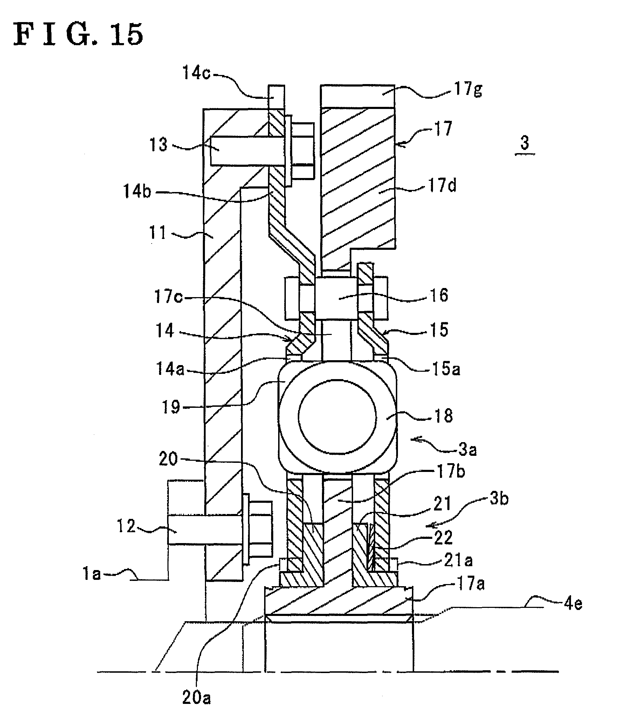

A fourteenth embodiment of the damper device 3 will be described below with reference to Fig. 15. Illustrated in Fig. 15 is cross-sectional diagram partially and schematically illustrating a configuration of the damper device 3 according to the fourteenth embodiment taken along the radial direction.

The damper device 3 according to the fourteenth embodiment is another modified example of he damper device 3 of the first embodiment. More specifically, in the fourteenth embodiment, a gear portion 14c is formed at an outer circumferential surface of the first side plate 14 so as to protrude in the radially outward direction relative to an outer circumferential surface of the flywheel 11. Similarly, a gear portion 17g is formed at an outer circumferential surface of the center plate member 17 so as to protrude in the radially outward direction relative to the outer circumferential surface of the flywheel 11. The gears 14c and 17g may be used as a pulse gear used for a vehicle control, a gear for an engine start-up test or the like. Other configurations of the damper device 3 according to the fourteenth embodiment are similar to the damper device 3 of the first embodiment. Additionally, the gear portions 14a and 17b may be provided at the damper device 3 of the second, third, fourth, fifth, sixth, seventh, eighth, ninth, tenth, eleventh, twelfth and thirteenth embodiments.

According to the fourteenth embodiment, in addition to advantages and merits similar to the first embodiment, the damper device 3 may be used also as the pulse gear for the vehicle control, the gear for the engine start-up test or the like.

[Fifteenth embodiment]

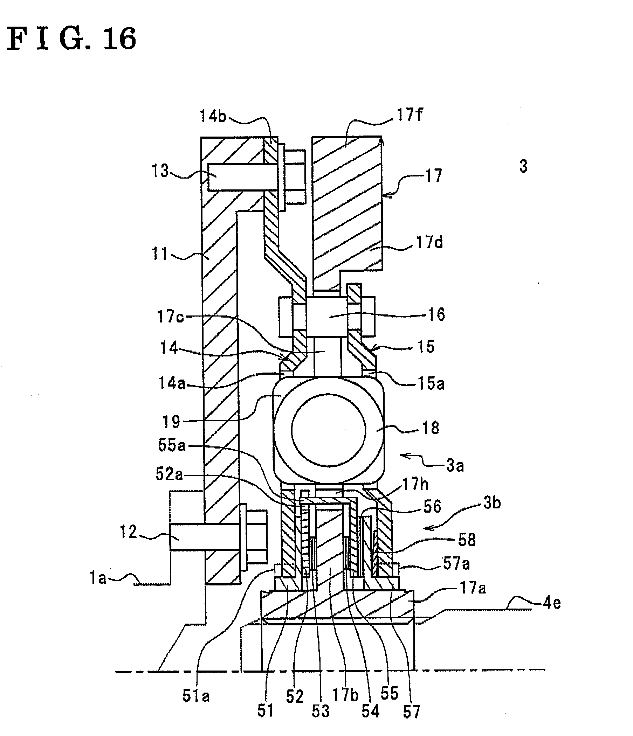

A fifteenth embodiment of the damper device 3 will be described below with reference to Fig. 16. Illustrated in Fig. 16 is cross-sectional diagram partially and schematically illustrating a configuration of the damper device 3 according to the fifteenth embodiment taken along the radial direction.

The damper device 3 according to the fifteenth embodiment is a modified example of the damper device 3 of the first embodiment. More specifically, the damper device 3 according to the fifteenth embodiment is configured so as to have a dual hysteresis mechanism for generating a first hysteresis torque at the hysteresis portion 3b in a case where a torsion angle formed between the first and second side plates 14 and 15 on the one hand and the center plate member 17 on the other hand falls within a predetermined range, and a second hysteresis torque, which is greater than the first hysteresis torque, in a case where the torsion angle exceeds the predetermined range. The dual hysteresis mechanism includes a first thrust member 51, a first control plate 52, a first low friction material 53, a second low friction material 54, a second control plate 55, a high friction material 56, a second thrust member 57 and a disc spring 58 as main components. Other configurations of the damper device 3 according to the fifteenth embodiment are similar to the damper device 3 of the first embodiment. Therefore, only configurations and components of the damper device 3 of the fifteenth embodiment differing from the first embodiment will be described below. Additionally, the dual hysteresis mechanism may be adapted to the damper device 3 of the second, third, fourth, fifth, sixth, seventh, eighth, ninth, tenth, eleventh, twelfth, thirteenth and fourteenth embodiments.

The center plate member 17 includes a recessed portion 17h (or a hole), which is formed by cutting off a portion of an inner circumferential portion of each of the opening portions 17c of the plate portion 17b, in connection with the dual hysteresis mechanism. Stopper portions 55a of the second control plate 55 are inserted into the respective recessed portions 17h while allowing each of the stopper portions 55a to be movable in the circumferential direction within a range of a distance between end surfaces of each of the recessed portion 17h in the circumferential direction. In other words, each of the recessed portions 17h allows a relative rotation between the center plate member 17 on the one hand and the first and second control plates 52 and 55 on the other hand within the range where the corresponding stopper portion 55a is movable in the circumferential direction. Furthermore, each of the recessed portions 17h restricts the relative rotation between the center plate member 17 on the one hand and the first and second control plates 52 and 55 on the other hand in a case where the stopper portion 55a contacts either side wall surfaces of the corresponding recessed portion 17h in the circumferential direction. The plate portion 17b is slidably sandwiched by the first and second low friction materials 53 and 54 at side wall surfaces of the radially inner circumferential portion of the plate portion 17b in the axial direction, respectively.

The first thrust member 51, which is formed in an annular shape, is provided between the first side plate 14 and the first control plate 52. The first thrust member 51 is a component of the hysteresis portion 3b and is made of a resin. A friction coefficient of the first thrust member 51 is set to be greater than friction coefficients of the first and second low friction materials 53 and 54 and is set to be lower than a friction coefficient of the high friction material 56. Alternatively, the friction coefficient of the first thrust member 51 may be set to be the same level as the friction coefficients of the first and second low friction materials 53 and 54. The first thrust member 51 is provided between the first side plate 14 and the first control plate 52 so as to press-contact the first control plate 52 while allowing the first thrust member 51 to be slidable in the axial direction. The first thrust member 51 does not slide relative to the first control plate 52 in a case where a torsion is generated between the first control plate 52 and the center plate member 17 within the range where the stopper portions 55a are movable in the circumferential direction relative to the corresponding recessed portions 17h. On the other hand, in a case where each of the stopper portion 55a contacts either one of the side wall surfaces of the corresponding recessed portion 17h in the circumferential direction and the torsion is generated between the first side plate 14 and the center plate member 17, the first thrust member 51 slides relative to the first control plate 42. The first thrust member 51 is formed so that an inner circumferential portion thereof extends in the axial direction, so that the inner circumferential portion of the first thrust member 51 is also positioned between the first side plate 14 and the hub portion 17a in the radial direction. Furthermore, the first thrust member 51 includes a detent portion 51a, which engages with the inner circumferential end portion of the first side plate 14 so as not to allow the first thrust member 51 to rotate relative to the first side plate 14 while allowing the first thrust member 51 to be slidable in the axial direction. Accordingly, the first thrust member 51 serves as a sliding bearing (a bush) for supporting the first side plate 14 on the hub portion 17a while allowing the first side plate 14 to rotate relative to the hub portion 17a.

The first control plate 52, which is formed in an annular shape, slides against either the first thrust member 51 or the first low friction material 53 in response to the torsion angle between the first side plate 14 and the center plate member 17. The first control plate 52 is a component of the hysteresis portion 3b. The first control plate 52 is made of a metal. Furthermore, the first control plate 52 includes recessed portions 52a, into which the respective stopper portions 55a of the second control plate 55 are engaged, at an outer circumferential portion of the first control plate 52, so that the first control plate 52 is not allowed to rotate relative to the second control plate 55 while allowing the first control plate 52 to be movable in the axial direction. The first control plate 52 is configured so as to rotate together with the second control plate 55 and so as to rotate relative to the center plate member 17 within the range where the stopper portions 55a are movable in the circumferential direction relative to the corresponding recessed portions 17h. On the other hand, in the case where each of the stopper portions 55a contacts either one of the side wall surfaces of the corresponding recessed portion 17h in the circumferential direction, the rotation of the first control plate 52 relative to the center plate member 17 is restricted. In a case where the first control plate 52 slidably press-contacts the first thrust member 51 and each of the stopper portions 55a contacts either one of the side wall surfaces of the corresponding recessed portion 17h in the circumferential direction so as to generate the torsion between the first side plate 14 and the center plate member 17, the first control plate 52 slides relative to the first thrust member 51. On the other hand, in a case where the first control plate 52 slidably press-contacts the first low friction material 53 and the torsion is generated between the first control plate 52 and the center plate member 17 within the range where the stopper portions 55a are movable in the circumferential direction relative to the respective recessed portions 17h, the first control plate 52 slides relative to the first low friction material 53. Additionally, a material of the first control plate 52 is not limited to the metal and a resin.

The first low friction material 53, which is formed in an annular shape, is provided between the first control plate 52 and the plate portion 17b. The first low friction material 53 is a component of the hysteresis portion 3b. The friction coefficient of the first low friction material 53 is set to be lower than the friction coefficients of the first thrust member 51 and the high friction material 56 and is set to be the same level as the friction coefficient of the second low friction material 54. Alternatively, the friction coefficient of the first low friction material 53 may be set to be the same level as the friction coefficient of the first thrust member 51. The first low friction material 53 slidably press-contacts the first control plate 52 and the plate portion 17b. Furthermore, the first low friction material 53 slides relative to the first control plate 52 or the plate portion 17b in the case where the torsion is generated between the first control plate 52 and the center plate member 17 within the range where the stopper portions 55a are movable in the circumferential direction relative to the respective recessed portions 17h. The first low friction material 53 may be modified so that the first low friction material 53 engages with one of the first control plate 52 and the plate portion 17b (alternatively, the first low friction material 53 may be fixed on one of the first control plate 52 and the late portion 17b) so as not to be relatively rotatable while allowing the first low friction material 53 to be slidable relative to the other one of the first control plate 52 and the plate portion 17b. Additionally, an outer diameter of the first low friction material 53 is set to be smaller than an outer diameter of the high friction material 56.

The second low friction material 54, which is formed in an annular shape, is provided between the second control plate 55 and the plate portion 17b. The second low friction material 54 is a component of the hysteresis portion 3b. The friction coefficient of the second low friction material 54 is set to be lower than a friction coefficients of the second thrust member 57 and the high friction material 56 and is set to be the same level as the friction coefficient of the first low friction material 53, Alternatively, the friction coefficient of the second low friction material 54 may be set to be the same level as the friction coefficient of the second thrust member 57. The second low friction material 54 slidably press-contacts the second control plate 55 and the plate portion 17b. Furthermore, the second low friction material 54 slides relative to the second control plate 55 or the plate portion 17b in the case where the torsion is generated between the second control plate 55 and the plate portion 17b within the range where the stopper portions 55a are movable in the circumferential direction relative to the respective recessed portions 17h. The second friction material 54 may be modified so that the second low friction material 54 engages with one of the second control plate 55 and the plate portion 17b (alternatively, the second low friction material 54 may be fixed on one of the second control plate 55 and the late portion 17b) so as not to be relatively rotatable while allowing the second low friction material 54 to be slidable relative to the other one of the second control plate 55 and the plate portion 17b. Additionally, an outer diameter of the second low friction material 54 is set to be smaller than the outer diameter of the high friction material 56.

The second control plate 55, which is formed in an annular shape, slides against the high friction material 56 or the second low friction material 54 in response to the torsion angle formed between the second side plate 15 and the center plate member 17. The second control plate 55 is a component of the hysteresis portion 3b and is made of a metal. Furthermore, the second control plate 55 includes the stopper portions 55a, which extend from the outer circumferential portion of the second control plate 55 towards the first side plate 14 in the axial direction. The stopper portions 55a are inserted into the respective recessed portions 17h of the plate portions 17b while allowing each of the stopper portions 55a to be movable in the circumferential direction within the range of the distance (a length) of the corresponding recessed portion 17h in the circumferential direction (i.e. within the side wall surfaces of the corresponding recessed portion 17h in the circumferential direction). In other words, the stopper portions 55a allow the relative rotation between the center plate member 17 on the one hand and the first and second control plates 52 and 55 on the other hand within the range where the stopper portions 55a are movable within the respective recessed portions 17h in the circumferential direction. Furthermore, in the case where each of the stopper portions 55a contacts either one of the side wall surfaces of the corresponding recessed portion 17h in the circumferential direction, the stopper portions 55a restrict the relative rotation between the center plate member 17 on the one hand and the first and second control plates 52 and 55 on the other hand. The stopper portions 55a engage with the respective recessed portions 52a of the control plate 52 so as not to allow the second control plate 55 to rotate relative to the first control plate 52 while allowing the second control plate 55 to be movable in the axial direction. Accordingly, the second control plate 55 rotates together with the first control plate 52. Furthermore, the second control plate 55 is configured so as to be rotatable relative to the center plate member 17 within the range where the stopper portions 55a are movable within the respective recessed portions 17h in the circumferential direction and so as not to rotate relative to the center plate member 17 in the case where each of the stopper portions 55a contacts either one of the side wall surfaces of the corresponding recessed portion 17h in the circumferential direction. The second control plate 55 slides relative to the second low friction material 54 in the case where the case where the second control plate 55 slidably press-contacts the second low friction material 54 and the torsion is generated between the second control plate 55 and the center plate member 17 within the range where the stopper portions 55a are movable within the respective recessed portions 17h in the circumferential direction. On the other hand, in the case where the second control plate 55 slidably press-contacts the high friction material 56 and each of the stopper portions 55a contacts either one of the side wall surfaces of the corresponding recessed portion 17h in the circumferential direction so as to generate the torsion between the second side plate 15 and the center plate member 17, the second control plate 55 slides relative to the high friction material 56. Additionally, roughing maybe applied to a surface (a slide surface) of the second control plate 55, at which the second control plate 55 slides against the high friction material 56, by applying a surface treatment, a heat treatment and the like to the slide surface of the second control plate 55. In this case, the high material member 56 may be retained at the second control plate 55 when the high friction material 56 slides relative to the second thrust member 57, so that an initial characteristic of the damper device 3 is stabilized even if the second control plate 55 and the high friction material 56 slide relative to each other. Additionally, the material of the second control plate 55 is not limited to the metal and a resin.

The high friction material 56, which is formed in an annular shape, is provided between the second control plate 55 and the second thrust member 57. The high friction material 56 is a component of the hysteresis portion 3b. The friction coefficient of the high friction material 56 is set to be greater than the friction coefficients of the first thrust member 51 and the first and second low friction materials 53 and 54. The high friction material 56 slidably press-contacts the second control plate 55 and the second thrust member 57. The high friction material 56 does not slide relative to the second control plate 55 or the second thrust member 57 in the case where the torsion is generated between the second control plate 55 and the center plate member 17 within the range where the stopper portions 55a are movable in the circumferential direction relative to the respective recessed portions 17h. When each of the stopper portions 55a contacts either one of the side wall surfaces of the corresponding recessed portion 17h in the circumferential direction and the torsion is generated between the second side plate 15 and the center plate member 17, the high friction material 56 slides relative to the second control plate 55 or the second thrust member 57. The high friction material 56 may be modified so that the high friction material 56 engages with one of the second control plate 55 and the second thrust member 57 (alternatively, the high friction material 56 may be fixed on one of the second control plate 55 and the second thrust portion 57) so as not to be relatively rotatable while allowing the high friction material 56 to be slidable relative to the other one of the second control plate 55 and the second thrust member 57. Additionally, in a case where a processing (a heat process, a surface treatment and the like) is applied to the slide surface of the second control plate 55, at which the second control plate 55 slides relative to the second thrust member 57, in order to increase a friction coefficient of the slide surface of the second control plate 55 to be greater than the friction coefficients of the first thrust member 51 and the first and second low friction materials 53 and 54, the high friction material 56 may not need to be provided at the damper device 3.

The second thrust member 57 is a component of the hysteresis portion 3b. The second thrust member 57, which is formed in an annular shape, is provided between the second side plate 15 and the high friction material 56. The second thrust member 57 is made of a resin. The friction coefficient of the second thrust member 57 is set to be greater than the friction coefficients of the first and second low friction materials 53 and 54 and is set to be lower than the friction coefficient of the high friction material 56. Alternatively, the friction coefficient of the second thrust member 57 may be set to be the same level as the friction coefficient of the first and second low friction materials 53 and 54. The second thrust member 57 is provided between the disc spring 58 and the high friction material 56 in the axial direction, so that the second thrust member 57 is biased towards the high friction material 56 by the disc spring 58, thereby slidably press-contacting with the high friction material 56. The second thrust member 57 does not slide relative to the high friction material 56 in the case where the torsion is generated between the second control plate 55 and the center plate member 17 within the range where the stopper portions 55a are movable in the circumferential direction relative to the respective recessed portions 17h. When each of the stopper portions 55a contacts either one of the side wall surfaces of the corresponding recessed portion 17h in the circumferential direction and the torsion is generated between the second side plate 15 and the center plate member 17, the second thrust member 57 slides relative to the high friction material 56. The second thrust member 57 is formed so that a radially inner circumferential end portion thereof extends in the axial direction, so that the radially inner circumferential end portion of the second thrust member 57 is positioned between the second side plate 15 and the hub portion 17a in the radial direction. Furthermore, the second thrust member 57 includes a detent portion 57a, which engages with the inner circumferential end portion of the second side plate 15, so as not to allow the second thrust member 57 to rotate relative to the second side plate -15 while allowing the second thrust member 57 to be movable in the axial direction. Accordingly, the second thrust member 57 serves as a sliding bearing (a bush) for supporting the second side plate 15 on the hub portion 17a so as to be rotatable relative to the hub portion 17a.

The disc spring 58, which is formed in a disc shape, is a component of the hysteresis portion 3b. The disc spring 58 is provided between the second thrust member 57 and the second side plate 15 so as to bias the second thrust member 57 towards the high friction material 56. An inner circumferential end portion of the disc spring 58 in the radial direction engages with the detent portion 57a of the second thrust member 57, so that the disc spring 58 is not allowed to be rotatable relative to the second thrust member 57 while allowing the disc spring 58 to be movable in the axial direction. Accordingly, because the disc spring 58 biases the second thrust member 57 towards the high friction material 56 and is supported by the second side plate 15, the first thrust member 51, the first control plate 52, the first low friction material 53, the plate portion 17b, the second low friction material 54, the second control, plate 55, the high friction material 56 and the second thrust member 57, which are arranged in parallel with each other, slidably press-contacts with the neighboring component therebetween.

An operation of the hysteresis portion 3b of the damper device 3 according to the fifteenth embodiment will be described below.

In the case where the torsion (a relatively small torsion) is generated between the center plate member 17 on the one hand and the first and second control plates 52 and 55 on the other hand at the hysteresis portion 3b within the range where the stopper portions 55a are movable in the circumferential direction relative to the respective recessed portions 17h, the first low friction material 53 slides relative to the first control plate 52 or the plate portion 17b and the second low friction material 54 slides relative to the second control plate 55 or the plate portion 17b, thereby generating a relatively small hysteresis torque. In this case, because a friction coefficient between the first thrust member 51 and the first control plate 52 is greater than a friction coefficient between the first low friction material 53 and the first control plate 52 or the plate portion 17b, the first thrust member 51 and the first control plate 52 do not slide relative to each other. Furthermore, because a friction coefficient between the high friction material 56 and the second control plate 55 or the second thrust member 57 is greater than a friction coefficient between the second low friction material 54 and the second control plate 55 or the plate portion 17b, the high friction material 56 does not slide relative to the second control plate 55 or the second thrust member 57.

In the case where the torsion (a relatively great torsion) is generated between the center plate member 17 on the one hand and the first and second side plates 14 and 15 on the other hand at the hysteresis portion 3b when each of the stopper portions 55a contacts either one of the side wall surfaces of the corresponding recessed portion 17h in the circumferential direction, the first thrust member 51 slides relative to the first control plate 52 and the high friction material 56 slides relative to the second control plate 55 or the second thrust member 57, thereby generating a hysteresis torque greater than the relatively small hysteresis torque generated in the above-mentioned case. In this case, the first low friction material 53 does not slide relative to the first control plate 52 or the plate portion 17b and the second low friction material 54 does not slide relative to the second control plate 55 or the plate portion 17b. Although the friction coefficient between the first low friction material 53 and the first control plate 52 or the plate portion 17b is lower than the friction coefficient between the first thrust member 51 and the first control plate 52, the first thrust member 51 does not slide relative to the first control plate 52 because each of the stopper portions 55a contacts either one of the side wall surfaces of the corresponding recessed portion 17h in the circumferential direction and the torsion is not generated between the center plate member 17 on the one hand and the first and second control plates 52 and 55 on the other hand. Furthermore, although the friction coefficient between the second low friction material 54 and the second control plate 55 or the plate portion 17b is lower than the friction coefficient between the high friction material 56 and the second control plate 55 or the second thrust member 57, the high friction material 56 does not slide relative to the second control plate 55 or the second thrust member 57, because each of the stopper portions 55a contacts either one of the side wall surfaces of the corresponding recessed portion 17h in the circumferential direction and the torsion is not generated between the center plate member 17 on the one hand and the first and second control plates 52 and 55 on the other hand.

According to the fifteenth embodiment, because the damper device 3 has the dual hysteresis mechanism, a shock generated when the engine 1 is started may be reduced. Specifically, because the inertia generated at a portion of the center plate member 17 positioned closer to the output side (i.e, the planetary gear mechanism 4, see Fig. 1) relative to the coil springs 18 is relatively great, the shock generated when the engine 1 is started may be effectively reduced.

[Sixteenth embodiment]

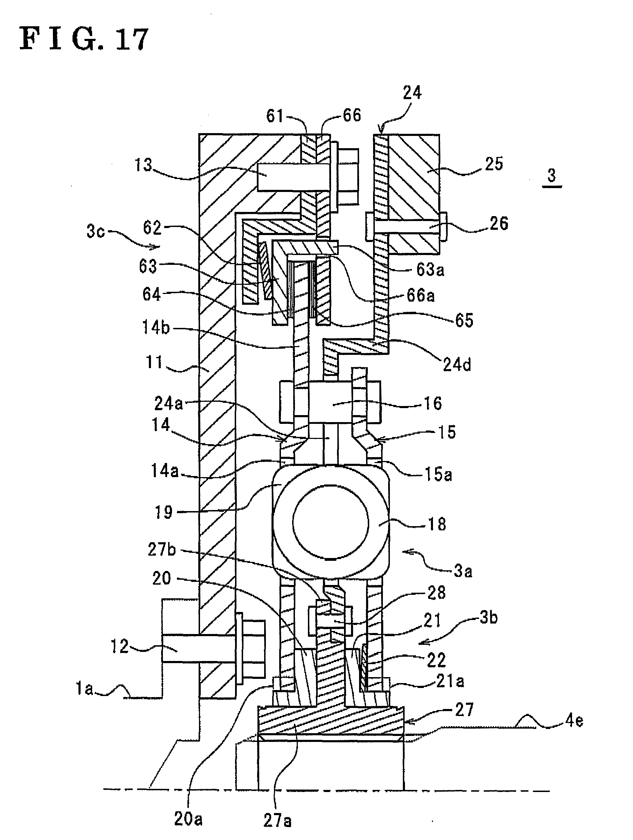

A sixteenth embodiment of the damper device 3 will be described below with reference to Fig. 17. Illustrated in Fig. 17 is a cross-sectional diagram partially and schematically illustrating a configuration of the damper device 3 according to the sixteenth embodiment taken along radial direction.

The damper device 3 according to the sixteenth embodiment is another modified example of the damper device 3 of the second embodiment. More specifically, the damper device 3 according to the sixteenth embodiment is configured so as to include a limiter portion 3c, which generates a slip when the torsion is not completely absorbed by the damper portion 3a and the hysteresis portion 3b, on the power transmission path between the extended portion 14b of the first side plate 14 and the flywheel 11, instead of connecting the extended portion 14b of the first side plate 14 to the flywheel 11 by means of the bolts 13 (see Fig. 3). The center plate 24 includes a bent portion 24d, which is positioned between the limiter portion 3c and the connecting pins 16, in order to avoid a contact between the center plate 24 and the limiter portion 3c. In the sixteenth embodiment, the limiter portion 3c includes the first side plate 14, a support plate 61, a disc spring 62, a pressure plate 63, a first friction material 64, a second friction material 65 and a cover plate 66 as major components. Other configurations of the damper device 3 according to the sixteenth embodiment are similar to the damper device 3 of the second embodiment. Therefore, only configurations and components of the damper device 3 of the sixteenth embodiment differing from the second embodiment will be described below.

The first and second friction materials 64 and 65 are attached on the side surfaces of the first side plate 14 in the axial direction at the outer circumferential portion of the extended portion 14b by means of rivets. Other configurations of the first side plate 14 are similar to the second embodiment (see Fig. 3).

The support plate 61, which is formed in an annular shape, is provided between the flywheel 11 and the cover plate 66. The support plate 61 is attached and fixed on the flywheel 11 by mean of the bolts 13 together with the cover plate 66, so that the support plate 61 and the cover plate 66 closely contact with each other at an outer circumferential portion thereof. The support plate 61 is formed so as to be spaced away from the cover plate 66 at an inner circumferential portion thereof. More specifically, the support plate 61 is formed so as to include a bent portion, which extends away from the cover plate 66 in the axial direction and then in the radially inward direction, so that a space is formed between the support plate 61 and the cover plate 66 at the inner circumferential portions thereof. Furthermore, the support plate 61 press-contacts the disc spring 62.

The disc spring 62, which is formed in a disc shape, is provided between the support plate 61 and the pressure plate 63. The disc spring 62 biases the pressure plate 63 towards the first friction material 64.

The pressure plate 63, which is formed in an annular shape, is provided between the disc spring 62 and the first friction material 64. The pressure plate 63 includes a detent portion 63a (or plural detent portions 63a), so that the pressure plate 63 is supported by the cover plate 66 so as not to be rotatable relative to the cover plate 66 while allowing the pressure plate 63 to be movable in the axial direction. More specifically, the detent portion 63a is inserted into a hole 66a (or plural holes 66a in the case where the pressure plate 63 includes plural detent portions 63a) of the cover plate 66, so that the pressure plate 63 does not rotate relative to the cover plate 66 while the pressure plate 63 is allowed to move in the axial direction. The pressure plate 63 is biased towards the first friction material 64 by the disc spring 62, so that the pressure plate 63 slidably press-contacts the first friction material 64.

The first friction material 64 is provided between the first side plate 14 and the pressure plate 63. The first friction material 64 is attached and fixed on the side plate 14 by means of the rivets. Furthermore, the first friction material 64 slidably press-contacts the pressure plate 63.

The second friction material 65 is provided between the first side plate 14 and the cover plate 66. The second friction material 65 is attached and fixed on the first side plate 14 by means of the rivets. Furthermore, the second friction material 65 slidably press-contacts the cover plate 66.

The cover plate 66, which is formed in an annular shape, is placed on a surface of the support plate 61 facing opposite to the flywheel 11 (i.e. the surface of the support plate 61 facing the right in Fig. 17). More specifically, the cover plate 66 is attached and fixed on the flywheel 11 by means of the bolts 13 together with the support plate 61 in a manner where the cover plate 66 overlaps and closely contacts the support plate 61 at the outer circumferential portions thereof. On the other hand, the inner circumferential portion of the cover plate 66 is spaced away from the support plate 61 in the axial direction. Furthermore, the cover plate 66 includes the hole 66a, which is used to support the pressure plate 63 on the cover plate 66 so as not to be rotatable relative to the cover plate 66 while allowing the pressure plate 63 to be movable in the axial direction. More specifically, the detent portion 63a of the pressure plate 63 is inserted into the hole 66a, so that the pressure plate 63 is not rotatable relative to the cover plate 66 while allowing the pressure plate 63 to be movable in the axial direction. The cover plate 66 slidably press-contacts the second friction material 65 at a sliding surface at the inner circumferential portion of the cover plate 66.

According to the sixteenth embodiment, in addition to advantages and merits similar to the second embodiment, an input of an excessive torque from the engine 1 to the planetary gear mechanism 4 (see Fig. 1) may be avoided by the limiter portion 3c.

[Seventeenth embodiment]

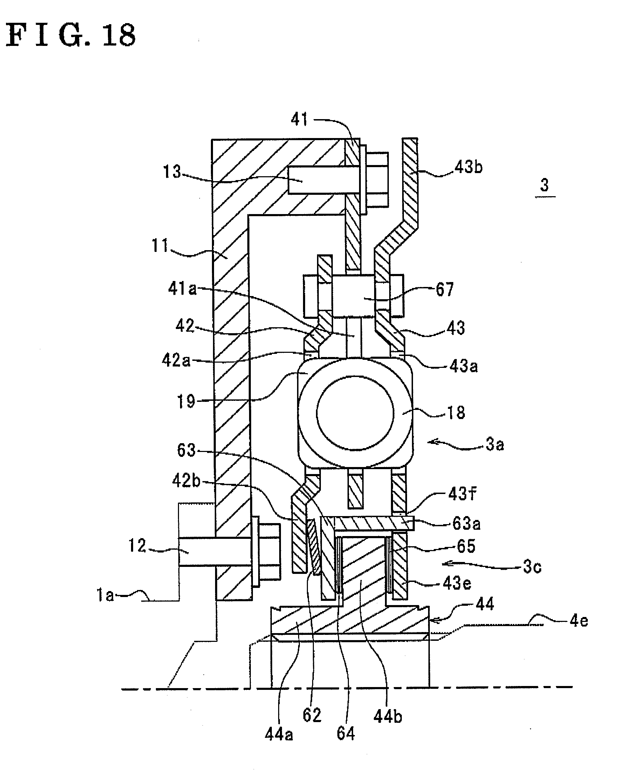

A seventeenth embodiment of the damper device 3 will be described below with reference to Fig. 18. Illustrated in Fig. 18 is a cross-sectional diagram partially and schematically illustrating a configuration of the damper device 3 according to the seventeenth embodiment taken along radial direction.

The damper device 3 according to the seventeenth embodiment is a modified example of the damper device 3 of the tenth embodiment. More specifically, the damper device 3 of the seventeenth embodiment is configured so as to include the limiter portion 3c, which generates a slip when the torsion is not completely absorbed by the damper portion 3a and the hysteresis portion 3b, on the power transmission path between the first and second side plates 42 and 43 on the one hand and the hub member 44 on the other hand, instead of connecting the first and second side plates 42 and 43 with the hub member 44 by means of the rivets 45 (see Fig. 11). The limiter portion 3c includes the first side plate 42, the second side plate 43, the disc spring 62, the pressure plate 63, the first friction material 64 and the second friction material 65 as major components. Other configurations of the damper device 3 according to the seventeenth embodiment are similar to the damper device 3 of the tenth embodiment. Therefore, only configurations and components of the damper device 3 of the seventeenth embodiment differing from the tenth embodiment will be described below.

The first side plate 42 includes a support portion 42b, which is a component of the limiter portion 3c, at the inner circumferential portion relative to the damper portion 3a. The support portion 42b press-contacts the disc spring 62. Other configurations of the first side plate 42 are similar to the first side plate 42 of the tenth embodiment (see Fig. 11).

The second side plate 43 includes a cover portion 43e, which is a component of the limiter portion 3c, at the inner circumferential portion relative to the damper portion 3a. The cover portion 43e includes a hole 43f (or plural holes 43f), which is used for supporting the pressure plate 63 on the second side plate 43 so as not to be rotatable relative to the second side plate 43 while allowing the pressure plate 63 to be movable in the axial direction. More specifically, the detent portion 63a (or plural detent portions 63a in the case where plural holes 43f are formed on the cover portion 43e) of the pressure plate 63 is inserted into the hole 43f (or the respective holes 43f), so that the pressure plate 63 does not rotate relative to the second side plate 43 while allowing the pressure plate 63 to be movable in the axial direction. The cover portion 43e slidably press-contacts the second friction material 65 at a sliding surface, at which the cover portion 43e contacts the second friction material 65. Other configurations of the second side plate 43 are similar to the second side plate 43 of the tenth embodiment (see Fig. 11).

The disc spring 62, which is formed in a disc shape, is provided between the support portion 42b of the first side plate 42 and the pressure plate 63. The disc spring 62 biases the pressure plate 63 towards the first friction material 64.

The pressure plate 63, which is formed in an annular shape, is provided between the disc spring 62 and the first friction material 64. The pressure plate 63 includes the detent portion 63a, which is used to support the pressure plate 63 on the cover portion 43e of the second side plate 43 so as not to be rotatable relative to the second side plate 43 while allowing the pressure plate 63 to be movable in the axial direction. More specifically, the detent portion 63a is inserted into the hole 43f formed at the cover portion 43e, so that the pressure plate 63 does not rotate relative to the second side plate 43 while allowing the pressure plate 63 to be movable in the axial direction. The pressure plate 63 is biased towards the first friction material 64 by the disc spring 62, so that the pressure plate 63 slidably press-contacts the first friction material 64.

The first friction material 64 is provided between the pressure plate 63 and the hub portion 44a of the hub member 44. Furthermore, the first friction material 64 is attached and fixed on the hub portion 44a by means of the rivets. The first friction material 64 slidably press-contacts the pressure plate 63.

The second friction material 65 is provided between the cover portion 43e of the second side plate 43 and the hub portion 44a of the hub member 44. Furthermore, the second friction material 65 is attached and fixed on the hub portion 44a by means of the rivets. The second friction material 65 slidably press-contacts the cover portion 43e.

According to the seventeenth embodiment, in addition to advantages and merits similar to the tenth embodiment, the input of the excessive torque from the engine 1 to the planetary gear mechanism 4 (see Fig. 1) may be avoided by the limiter portion 3c.

[Eighteenth embodiment]

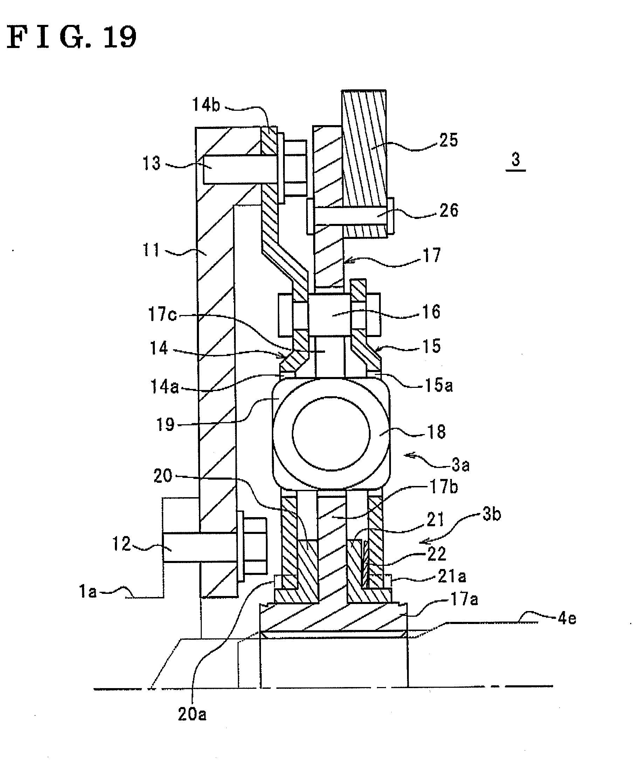

An eighteenth embodiment of the damper device 3 will be described below with reference to Fig. 19. Illustrated in Fig. 19 is a cross-sectional diagram partially and schematically illustrating a configuration of the damper device 3 according to the eighteenth embodiment taken along radial direction.

The damper device 3 according to the eighteenth embodiment is a modified example of the damper device 3 of the first embodiment. More specifically, the damper device 3 according to the eighteenth embodiment is configured so that the inertia member 25 is attached and fixed on the center plate member 17 by means of the rivets 26, instead of providing the inertia portion 17d at the center plate member 17 (see Fig. 2), and the outer diameter of the inertia ember 25 is set to be greater than the outer diameter of the first side plate 14, so that a unit, which is composed of the center plate member 17, the inertia member 25 and the rivets 26, is formed so that a diameter thereof is greater than the diameter of the first side plate 14. The inertia member 25 is formed in the annular shape. Furthermore, the inertia member 25 is attached on the surface of the outer circumferential portion of the center plate member 17 facing the second side plate 15 by means of the rivets 26. The inertia member 25 is formed so as not to contact the second side plate 15 when being assembled and is arranged at a position radially outwardly of the second side plate 15. The inertia member 25 may be formed so that the diameter of the inertia member 25 becomes 1.1 times equal to or greater than the outer diameter of the first side plate 14. Other configurations of the damper device 3 according to the eighteenth embodiment are similar to the damper device 3 of the first embodiment.

According to the eighteenth embodiment, as is the case with the first embodiment, the inertia generated on the power transmission path between the coil springs 18 and the planetary gear mechanism 4 (see Fig. 1) is increased because the outer diameter of the plate portion 17b of the enter plate member 17 is greater than the outer diameter of the second side plate 15, accordingly, the occurrence of the gear noise at the planetary gear mechanism 4 may be avoided while avoiding the increase of the size of the damper device 3 in the axial direction. Furthermore, because the inertia member 25 is attached on the outer circumferential portion of the center plate member 17, the inertia generated on the power transmission path between the coil springs 18 and the planetary gear mechanism 4 is further increased, thereby reducing the gear noise generated the planetary gear mechanism 4. Still further, because the outer diameter of the inertia member 25 is set to be greater than the outer diameter of the first side plate 14 so that the diameter of the unit, which is composed of the center plate member 17, the inertia member 25 and the rivets 26 becomes greater than the diameter of the first side plate 14, the inertia generated on the power transmission path between the coil springs 18 and the planetary gear mechanism 4 may be further increased, thereby avoiding the gear noise to be generated at the planetary gear mechanism 4.
A damper device (3) includes a first side plate (14, 42) arranged at a position axially displaced from a flywheel (11), a second side plate (15, 43) connected to the first side plate, a center plate member (17, 24, 41) between the first and second side plates, and a spring member (18) absorbing a torque fluctuation generated between the first and second side plates on the one hand and the center plate member on the other, wherein one of the first side plate and the center plate member is connected to the flywheel at an outer circumferential portion thereof and, an outer diameter of one of the first side plate or the center plate member, which is not connected to the flywheel, and the second side plate is set to be greater than an outer diameter of the other one of the first side plate or the center plate member and the second side plate.

## Claims

1. A damper device (3) comprising:
a first side plate (14, 42) arranged at a position displaced from a flywheel (11), to which a rotational force from a power source (1) is transmitted, in an axial direction;
a second side plate (15, 43) arranged at a position displaced towards the flywheel (11) from the first side plate (14, 42) and connected to the first side plate (14, 42);
a center plate member (17, 24, 41) provided between the first side plate (14, 42) and the second side plate (15, 43); and
a spring member (18) absorbing a torque fluctuation generated between the first side plate (14,42) and the second side plate (15, 43) on the one hand and the center plate member (17, 24, 41) on the other hand, wherein
one of the first side plate (14, 42) and the center plate member (17, 24, 41) is connected to the flywheel (11) at an outer circumferential portion thereof and,
an outer diameter of one of the first side plate (14, 42) or the center plate member (17, 24, 41), which is not connected to the flywheel (11), and the second side plate (15, 43) is set to be greater than an outer diameter of the other one of the first side plate (14, 42) or the center plate member (17, 24, 41), which is not connected to the flywheel (11), and the second side plate (15, 43).

2. The damper device (3) according to Claim 1 wherein the first side plate (14, 42) is connected to the flywheel (11) at the outer circumferential portion thereof, and the center plate member (17, 24, 41) is formed so that the outer diameter thereof is set to be greater than the outer diameter of the first side plate (14, 42) or the second side plate (15, 43).

3. The damper device (3) according to Claim 1 or Claim 2, wherein the center plate member (17) is formed so that a thickness at an outer circumferential portion thereof positioned radially outwardly of the second side plate (15) is set to be thicker than a thickness at an inner circumferential portion of the center plate member (17).

4. The damper device (3) according to any one of Claims 1 to 3, wherein the center plate member (17) includes a hub member (27, 44), which outputs the rotational force towards the gear mechanism (4) and a center plate (24, 41), which is connected to the hub member (27, 44) at an inner circumferential portion of the center plate (24, 41), receives one end portion of the spring member (18) at an intermediate portion of the center plate (24, 41) and is formed so that an outer diameter of the center plate (24, 41) becomes greater than an outer diameter of the first side plate (14, 42) or the second side plate (15, 43).

5. The damper device (3) according to Claim 4, wherein the center plate member (17) includes an inertia member (25, 46), which is connected to an outer circumferential portion of the center plate (24, 41) positioned radially outwardly of the second side plate (15, 43).

6. The damper device (3) according to any one of Claims 1 to 5 further comprising a bearing (20, 21, 31, 51, 57), which is provided between the center plate member (17) and the first side plate (14, 42) or the second side plate (15, 43) in a radial direction of the damper device (3).

7. The damper device (3) according to any one of Claims 1 to 6 further comprising a connecting pin (16, 67), which connects the first side plate (14, 42) and the second side plate (15, 43) while keeping a predetermined distance therebetween and is inserted into an opening portion (17c, 24a, 41a) formed on the center plate (17, 24, 41) so as to be movable in a circumferential direction.

8. The damper device (3) according to any one of Claims 1 to 7, wherein the center plate member (17) includes a cut-out portion (17f) or a hole portion so that a bolt (13) passes therethrough in order to connect the first side plate (14) to the flywheel (11) at an outer circumferential portion thereof by means of the bolt (13).

9. The damper device (3) according to any one of Claims 1 to 8, wherein the first side plate (14) is connected to the flywheel (11) at an outer circumferential portion thereof by means of a bolt (13), which is attached to the flywheel (11) and the first side plate (14) from a surface of the flywheel (11) facing opposite to the first side plate (14).

10. The damper device (3) according to any one of Claims 1 to 15, wherein at least one of the center plate member (17, 24, 41) and the first side plate (14, 42) includes a gear portion (14c, 17g) at an outer circumferential surface.

11. The damper device (3) according to any one of Claims 1 to 10 further including a dual hysteresis mechanism, wherein the dual hysteresis mechanism is arranged in parallel with a damper portion (3a) on a power transmission path of the damper device (3), generates a first hysteresis torque in a case where a torsion angle between the first side plate (14) and the second side plate (15) on the one hand and the center plate member (17) on the other hand falls within a predetermined range and generates a second hysteresis torque, which is greater than the first hysteresis torque, in a case where the torsion angle exceeds the predetermined range.

12. The damper device (3) according to Claim 1, wherein the center plate (17, 24, 41) is connected to the flywheel (11) at the outer circumferential portion thereof and the second side plate (15, 43) is formed so that the outer diameter thereof is set to be greater than the outer diameter of the first side plate (14, 42).

13. The damper device (3) according to Claim 12, wherein the second side plate (43) includes a cut-out portion (43c) or a hole portion so that a bolt (13) passes through the second side plate (43) and the center plate (41) is connected to the flywheel (11) at an outer circumferential portion thereof by means of the bolt (13), which is attached to the center plate (41) and the flywheel (11) from a surface of the center plate (41) facing the second side plate (43).

14. The damper device (3) according to any one of Claims 1 to 13 further including a limiter portion (3c), wherein the limited portion (3c) is arranged on a power transmission path of the damper device (3) so as to be arranged in parallel with the damper portion (3a) and generates a slip in a case where the torque fluctuation exceeds a predetermined value.
